(19) Europäisches Patentamt / European Patent Office / Office européen des brevets

(11) **EP 4 502 047 B1**

(12) **EUROPEAN PATENT SPECIFICATION**

(45) Date of publication and mention of the grant of the patent:
**18.03.2026 Bulletin 2026/12**

(21) Application number: **23780822.5**

(22) Date of filing: **30.03.2023**

(51) International Patent Classification (IPC):
*C08L 29/04* (2006.01)  *B32B 27/18* (2006.01)
*B32B 27/28* (2006.01)  *B32B 27/30* (2006.01)
*B65D 65/40* (2006.01)  *C08K 3/22* (2006.01)
*C08K 5/01* (2006.01)  *C08K 5/098* (2006.01)
*C08L 23/00* (2006.01)  *C08L 23/08* (2025.01)
*C08L 23/10* (2006.01)  *C08L 25/04* (2006.01)
*C08L 77/00* (2006.01)

(52) Cooperative Patent Classification (CPC):
(C-Sets available)
C08K 3/22; B32B 27/18; B32B 27/28; B32B 27/30;
B65D 65/40; C08K 5/01; C08K 5/098; C08L 23/00;
C08L 23/08; C08L 23/0861; C08L 23/10;
C08L 23/12; C08L 23/26; C08L 29/04; C08L 77/00;
(Cont.)

(86) International application number:
**PCT/JP2023/013063**

(87) International publication number:
**WO 2023/190814 (05.10.2023 Gazette 2023/40)**

(54) **ETHYLENE-VINYL ALCOHOL COPOLYMER COMPOSITION AND METHOD FOR PRODUCING SAME, MELT-FORMING MATERIAL AND PELLETS USING SAME, AND MULTILAYER STRUCTURE AND PRODUCTION METHOD THEREOF**

ETHYLEN-VINYLALKOHOL-COPOLYMERZUSAMMENSETZUNG UND VERFAHREN ZUR HERSTELLUNG DAVON, SCHMELZBILDENDES MATERIAL UND PELLETS UNTER VERWENDUNG DAVON UND MEHRSCHICHTIGE STRUKTUR UND HERSTELLUNGSVERFAHREN DAVON

COMPOSITION DE COPOLYMÈRE D'ÉTHYLÈNE-ALCOOL VINYLIQUE ET PROCÉDÉ POUR SA PRODUCTION, MATÉRIAU FORMANT UNE MASSE FONDUE ET PASTILLES EN UTILISANT CELUI-CI, ET STRUCTURE MULTICOUCHE ET PROCÉDÉ DE PRODUCTION DE CELUI-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: 30.03.2022  JP 2022057034
30.03.2022  JP 2022057035
30.03.2022  JP 2022057036
30.03.2022  JP 2022057037
30.03.2022  JP 2022057038

(43) Date of publication of application:
**05.02.2025 Bulletin 2025/06**

(73) Proprietor: **Mitsubishi Chemical Corporation**
**Tokyo 100-8251 (JP)**

(72) Inventors:
• **TERAOKA, Kota**
 **Tokyo 100-8251 (JP)**
• **TOMITA, Yuuko**
 **Tokyo 100-8251 (JP)**
• **ITO, Takuya**
 **Tokyo 100-8251 (JP)**

(74) Representative: **Hoffmann Eitle**
**Patent- und Rechtsanwälte PartmbB**
**Arabellastraße 30**
**81925 München (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**EP-B1- 0 787 755**     **WO-A1-2020/213554**
**WO-A1-2022/054887**     **JP-A- 2019 163 378**
**JP-A- 2019 163 378**     **JP-A- 2021 181 548**
**JP-B1- 6 865 334**     **US-A1- 2020 087 496**

(52) Cooperative Patent Classification (CPC): (Cont.)
C08K 2003/2241; C08L 2203/30; C08L 2205/02;
C08L 2205/03

C-Sets
**C08K 3/22, C08L 29/04;**
**C08K 5/01, C08L 29/04;**

**C08K 5/098, C08L 29/04;**
**C08L 29/04, C08L 23/0815, C08L 23/26,**
**C08K 3/22;**
**C08L 29/04, C08L 23/12, C08K 3/22;**
**C08L 29/04, C08L 77/02, C08K 3/22**

**Description**

TECHNICAL FIELD

The present disclosure relates to an ethylene-vinyl alcohol copolymer (which hereinafter may be referred to as "EVOH resin") composition and a method for producing the same, a melt-forming material and pellets using the same, and a multilayer structure and a production method thereof.

BACKGROUND ART

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the problem, for example, JP-A-H11-106592discloses a resin composition containing an EVOH resin (A), acetic acid (B), and magnesium acetate and/or calcium acetate (C), wherein the amount of (B) is 0.05 parts by mass or less relative to 100 parts by mass of (A), and the amount of (C) on a metal basis is 0.001 to 0.02 parts by mass relative to 100 parts by mass of (A). It discloses that using this resin composition can provide a molded article excellent in long-run workability in melt molding, hardly causing fish eyes, striation, or coloring, thus excellent in appearance; furthermore, even when the molded article is processed into a laminate, odor emanation is reduced and the laminate is excellent in interlayer adhesion even after a secondary process such as stretching and deep drawing.

US2020087496A1 discloses melt-formable EVOH compositions that are substantially free from colouration after heating. Compositions comprise: i) EVOH resin, ii) an alkaline earth metal compound (0.1 to 500 ppm on a metal basis), and iii) an iron compound (0.01 to 20 ppm on a metal basis).

SUMMARY

PROBLEMS TO BE SOLVED BY THE DISCLOSURE

The technique disclosed in JP-A-H11-106592 obtains a molded article excellent in long-run workability in melt molding, hardly causing fish eyes, striation, or coloring, thus excellent in appearance. However, molding apparatuses tend to have higher functionality in recent years, along with diversified feed block and die designs in the molding apparatuses and various demands for higher functionality such as thinner films and the increased number of layers in a multilayer structure in a final product. Accordingly, a resin tends to be thermally degraded in a molding apparatus having a complicated structure due to the higher functionality, resulting in reduced productivity (long-run workability) of products. This leads to a demand for further improvement.

The present disclosure provides an EVOH resin composition that suppresses thermal degradation of an EVOH resin during heating in melt molding and the like.

MEANS FOR SOLVING THE PROBLEMS

Meanwhile, in view of the circumstances, the inventors of the present disclosure have found that an EVOH resin composition suppressing thermal degradation of an EVOH resin during heating in melt molding and the like can be obtained by adding at least one compound (B) selected from a group consisting of a metal compound belonging to period 4 d-block of a long Periodic Table (other than a titanium compound) (B1), a polyolefin resin (B2), an olefin polymer (B3), a polyamide resin (B4), and a styrene derivative having a substituent at an α-position (B5), and a particular minute amount of a titanium compound to the EVOH resin.

Specifically, the present disclosure has the following aspects.

[1] An ethylene-vinyl alcohol copolymer composition comprising: an ethylene-vinyl alcohol copolymer (A); at least one compound (B) selected from a group consisting of a metal compound belonging to period 4 d-block of a long Periodic Table, other than a titanium compound (B1), a polyolefin resin (B2), an olefin polymer (B3), a polyamide resin (B4), and a styrene derivative having a substituent at an α-position (B5); and a titanium compound (C),

wherein the olefin polymer (B3) is at least one selected from a group consisting of olefin thermoplastic elastomer, aliphatic rubber, and an ionomer, and

wherein the amount of the titanium compound (C) on a metal basis is 0.00005 ppm or more and less than 5 ppm per mass of the ethylene-vinyl alcohol copolymer composition.

[2] The ethylene-vinyl alcohol copolymer composition according to [1], wherein a mass content ratio (A)/(B) of the ethylene-vinyl alcohol copolymer (A) to the component (B) is 1/99 to 99/1.

[3] The ethylene-vinyl alcohol copolymer composition according to [1] or [2], wherein the amount of the titanium compound (C) on a metal basis is 0.001 to 3 ppm relative to total mass of the ethylene-vinyl alcohol copolymer (A) and the titanium compound (C).

[4] The ethylene-vinyl alcohol copolymer composition according to any one of [1] to [3], wherein the amount of the metal compound belonging to period 4 d-block of a long Periodic Table (B1) on a metal basis is 0.1 to 500 ppm per mass of the ethylene-vinyl alcohol copolymer composition.

[5] The ethylene-vinyl alcohol copolymer composition according to any one of [1] to [4], wherein the metal compound belonging to period 4 d-block of a long Periodic Table (B1) is a zinc compound.

[6] The ethylene-vinyl alcohol copolymer composition according to any one of [1] to [5], wherein the metal compound belonging to period 4 d-block of a long Periodic Table (B1) is carboxylate.

[7] The ethylene-vinyl alcohol copolymer composition according to any one of [1] to [3], wherein the polyolefin resin (B2) is a polyolefin resin having a density of 0.89 g/cm$^3$ or greater.

[8] The ethylene-vinyl alcohol copolymer composition according to any one of [1] to [3] and [7], wherein the polyolefin resin (B2) is polypropylene.

[9] The ethylene-vinyl alcohol copolymer composition according to any one of [1] to [3], wherein the amount of the styrene derivative having a substituent at an $\alpha$-position (B5) is 1 to 10000 ppm per mass of the ethylene-vinyl alcohol copolymer composition.

[10] The ethylene-vinyl alcohol copolymer composition according to any one of [1] to [3] and [9], wherein the styrene derivative having a substituent at an $\alpha$-position (B5) is an $\alpha$-methylstyrene derivative.

[11] A method for producing the ethylene-vinyl alcohol copolymer composition according to any one of [1] to [10], comprising melt-mixing a composition raw material comprising the (A), (B), and (C).

[12] A melt-forming material comprising the ethylene-vinyl alcohol copolymer composition according to any one of [1] to [10].

[13] Pellets comprising the ethylene-vinyl alcohol copolymer composition according to any one of [1] to [10].

[14] A multilayer structure comprising at least one layer comprising the ethylene-vinyl alcohol copolymer composition according to any one of [1] to [10].

[15] A method for producing the multilayer structure according to [14], comprising melt-molding a layer comprising the ethylene-vinyl alcohol copolymer composition.

EFFECTS OF THE DISCLOSURE

The EVOH resin composition according to the present disclosure has excellent thermal stability, and thus suppresses thermal degradation of the EVOH resin during melt molding.

EMBODIMENTS OF THE DISCLOSURE

Hereinafter the present disclosure will be described more specifically based on exemplary embodiments of the present disclosure. However, the present disclosure is not limited to these embodiments.

In the present disclosure, the expression "X to Y" (X and Y are given numbers) is intended to encompass "preferably greater than X" or "preferably less than Y" unless otherwise specified, in addition to the meaning of "X or more and Y or less".

Further, the expression "X or more" (X is a given number) or "Y or less" (Y is a given number) is intended to encompass the meaning "preferably more than X" or "preferably less than Y".

In the present disclosure, the expression "x and/or y" (x and y are each a given configuration or component) is intended to mean the following three meanings: only x; only y; and x and y.

The EVOH resin composition according to the present disclosure has a "first aspect" wherein the component (B) is the metal compound belonging to period 4 d-block of a long Periodic Table (other than a titanium compound) (B1), a "second aspect" wherein the component (B) is a polyolefin resin (B2), a "third aspect" wherein the component (B) is a olefin polymer (B3), a "fourth aspect wherein the component (B) is a polyamide resin (B4), and a "fifth aspect" wherein the component (B) is a styrene derivative having a substituent at an $\alpha$-position (B5). Hereinafter, each aspect will be described.

<<First Aspect>>

<EVOH Resin Composition>

An EVOH resin composition according to one embodiment of the present disclosure (hereinafter referred to as "the present EVOH resin composition") contains an EVOH resin (A) as a main component, a metal compound belonging to period 4 d-block of a long Periodic Table (B1), and a particular minute amount of a titanium compound (C).

Specifically, the present disclosure has the following aspects.

[1-1] An EVOH resin composition comprising an EVOH resin (A), a metal compound belonging to period 4 d-block of a long Periodic Table (other than a titanium compound) (B1), and a titanium compound (C), wherein the amount of the titanium compound (C) on a metal basis is 0.001 ppm or more and less than 5 ppm per mass of the EVOH resin composition.

[1-2] The EVOH resin composition according to [1-1], wherein the amount of the metal compound belonging to period 4 d-block of a long Periodic Table (B1) on a metal basis is 0.1 to 500 ppm per mass of the EVOH resin composition.

[1-3] The EVOH resin composition according to [1-1] or [1-2], wherein a mass ratio of the amount of the metal compound belonging to period 4 d-block of a long Periodic Table (B1) on a metal basis to the amount of the titanium compound (C) on a metal basis is 0.03 to 50000.

[1-4] The EVOH resin composition according to any one of [1-1] to [1-3], wherein the metal compound belonging to period 4 d-block of a long Periodic Table (B1) is a zinc compound.

[1-5] The EVOH resin composition according to any one of [1-1] to [1-4], wherein the metal compound belonging to period 4 d-block of a long Periodic Table (B1) is carboxylate.

[1-6] A melt-forming EVOH resin composition comprising the EVOH resin composition according to any one of [1-1] to [1-5].

[1-7] Pellets comprising the EVOH resin composition according to any one of [1-1] to [1-5].

[1-8] A multilayer structure comprising at least one layer comprising the EVOH resin composition according to any one of [1-1] to [1-5].

[1-9] A method for producing the EVOH resin composition according to any one of [1-1] to [1-5], comprising a step of melt-mixing a composition raw material comprising the EVOH resin and a titanium compound.

[1-10] A method for producing the multilayer structure according to [1-8], comprising a step of melt-molding a layer comprising the EVOH resin composition.

Furthermore, the present EVOH resin composition contains the EVOH resin (A) as a base resin, where the amount of the EVOH resin (A) in the present EVOH resin composition is typically 70% by mass or more, preferably 80% by mass or more, more preferably 90% by mass or more, and particularly preferably 95% by mass or more.

Each component will be described below.

[EVOH Resin (A)]

The EVOH resin (A) used in the present disclosure is a water-insoluble thermoplastic resin typically obtained by saponifying an ethylene-vinyl ester copolymer which is a copolymer of ethylene and a vinyl ester monomer.

Vinyl acetate is typically used as the vinyl ester monomer in view of its good commercial availability and efficiency in treating impurities during production. Examples of the vinyl ester monomer other than vinyl acetate include: aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters such as vinyl benzoate. Generally used is an aliphatic vinyl ester having 3 to 20 carbon atoms, preferably 4 to 10 carbon atoms, and particularly preferably 4 to 7 carbon atoms. Although these are generally used alone, a plurality of kinds thereof may be simultaneously used as necessary.

Copolymerization of the ethylene and the vinyl ester monomer can be performed using any known polymerization method, for example, solution polymerization, suspension polymerization, emulsion polymerization, or the like. Generally used is the solution polymerization using methanol as a solvent. Saponification of the ethylene-vinyl ester copolymer to be obtained can also be performed using a known method.

The EVOH resin (A) produced in this manner mainly contains an ethylene-derived structural unit and a vinyl alcohol structural unit, and contains a small amount of a vinyl ester structural unit that remains unsaponified.

The ethylene structural unit content in the EVOH resin (A) is typically 20 to 60 mol%, preferably 25 to 50 mol%, and particularly preferably 25 to 35 mol%. The ethylene structural unit content can be controlled by the pressure of ethylene in the copolymerization of the vinyl ester monomer and the ethylene. If the content is too low, gas barrier properties in high humidity and melt moldability tend to be reduced, whereas if the content is too high, the gas barrier properties tend to be reduced.

Note that the ethylene structural unit content can be measured in conformity with ISO14663.

A saponification degree in the EVOH resin (A) is typically 90 to 100 mol%, preferably 95 to 100 mol%, and particularly preferably 99 to 100 mol%. The saponification degree can be controlled by the amount of a saponification catalyst (an alkaline catalyst such as sodium hydroxide is typically used), temperature, time, etc. when saponifying the ethylene-vinyl ester copolymer. If the saponification degree is too low, the gas barrier properties, thermal stability, moisture resistance, and the like tend to be decreased.

The saponification degree in the EVOH resin (A) can be measured in conformity with JIS K6726 (where a solution for use is obtained by homogenously dissolving the EVOH resin in a water/methanol solvent).

A melt flow rate (MFR) (at 210°C with a load of 2160 g) in the EVOH resin (A) is typically 0.5 to 100 g/10 min, preferably 1 to 50 g/10 min, and particularly preferably 3 to 35 g/10 min. If the MFR is too high, stability during film forming tends to be impaired, whereas if the MFR is too low, viscosity tends to become so high that melt extrusion becomes difficult.

The MFR is an index of a polymerization degree of the EVOH resin (A), and can be adjusted by the amount of a polymerization initiator and the amount of a solvent upon copolymerizing the ethylene and the vinyl ester monomer.

Additionally, the EVOH resin (A) may further contain a structural unit derived from any of the following comonomers in a range that does not impair the effects of the present disclosure (for example, 10 mol% or less of the EVOH resin (A)).

Examples of the comonomers include: olefins such as propylene, 1-butene, and isobutene; hydroxyl-containing α-olefins such as 3-butene-1-ol, 3-butene-1,2-diol, 4-penten-1-ol, and 5-hexen-1,2-diol, and derivatives including esterification products and acylation products of these α-olefins; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), or salts thereof, or mono- or di-alkyl esters thereof each including a C1 to C18 alkyl group; acrylamide and analogues thereof such as N-alkylacrylamide including a C1 to C18 alkyl group, N,N-dimethylacrylamide, 2-acrylamidopropanesulfonic acid or a salt thereof, and acrylamidopropyldimethylamine or an acid salt or a quaternary salt thereof; methacrylamide and analogues thereof such as N-alkylmethacrylamide including a C1 to C18 alkyl group, N,N-dimethyl methacrylamide, 2-methacrylamidopropanesulfonic acid or a salt thereof, and methacrylamidopropyldimethylamine or an acid salt or a quaternary salt thereof; N-vinylamides such as N-vinylpyrrolidone, N-vinylformamide, and N-vinylacetamide; vinyl cyanides such as acrylonitrile and methacrylonitrile; vinyl ethers such as alkyl vinyl ethers each including a C1 to C18 alkyl group, hydroxyalkyl vinyl ethers, and alkoxyalkyl vinyl ethers; vinyl halide compounds such as vinyl chloride, vinylidene chloride, vinyl fluoride, vinylidene fluoride, and vinyl bromide; vinylsilanes such as trimethoxy vinyl silane; allyl halide compounds such as allyl acetate and allyl chloride; allyl alcohols such as allyl alcohol and dimethoxyallyl alcohol; trimethyl-(3-acrylamido-3-dimethylpropyl)-ammonium chloride, and acrylamido-2-methylpropanesulfonic acid. These can be used alone or in combination of two or more.

Among these, hydroxyl-containing α-olefins are preferred. Especially, 3-butene-1,2-diol and 5-hexene-1,2-diol are preferred. When the hydroxyl-containing α-olefins are copolymerized, the EVOH resin to be obtained will have a primary hydroxyl group in its side chain. Such EVOH resin having a primary hydroxyl group in the side chain, especially an EVOH resin having a 1,2-diol structure in its side chain is preferred in view of favorable secondary formability with gas barrier properties maintained.

When the EVOH resin (A) used in the present disclosure has a primary hydroxyl group in its side chain, the amount of a structural unit derived from a monomer having the primary hydroxyl group is typically 0.1 to 20 mol%, preferably 0.5 to 15 mol%, and particularly preferably 1 to 10 mol% of the EVOH resin (A).

Further, a "post-modified" EVOH resin such as an esterified, urethane-modified, acetalized, cyanoethylated, or oxyalkylenated EVOH resin can also be used as the EVOH resin (A).

When the post-modified EVOH resin is used, a modification rate thereof is typically 10 mol% or less, preferably 4 mol% or less. If the modification rate in the EVOH resin for use is too high, thermal degradation tends to be easily caused, resulting in reduced long-run workability.

Furthermore, the EVOH resin (A) may be a mixture of EVOH resins each having a different ethylene structural unit content, saponification degree, polymerization degree, copolymer component, or the like from each other.

[Metal Compound Belonging to Period 4 d-Block of a Long Periodic Table (B1) (Other Than Titanium Compound)]

Examples of the metal compound belonging to period 4 d-block (which hereinafter may be referred to as "specific period d-block") of a long Periodic Table (B1) (other than a titanium compound, the same applies to the following) used in the present disclosure include a scandium compound, vanadium compound, chromium compound, manganese compound, cobalt compound, nickel compound, copper compound, zinc compound, and the like. Particularly, a zinc compound is preferred in view of easiness for achieving the effects of the disclosure.

Additionally, the metal compound belonging to d-block (B1) includes salts, oxides, hydroxides, and the like of the metals belonging to the specific period d-block. Among these, from the viewpoints of economic efficiency and dispersibility, metal oxides and metal salts belonging to the specific period d-block are preferred. Especially, the metal salts belonging to the specific period d-block are preferred in view of easiness for achieving the effects of the disclosure.

Examples of the metal salts belonging to the specific period d-block include: inorganic salts such as carbonate, bicarbonate, phosphate, borate, sulfate, and chloride salt; and organic salts such as carboxylate.

Among these, carboxylate is particularly preferred in view of easiness for achieving the effects of the disclosure.

Although saturated carboxylate is generally used as the carboxylate in view of commercial availability, unsaturated carboxylate may also be used. Examples of the saturated carboxylate include: monovalent carboxylates such as acetate, butyrate, propionate, enanthate, caprylate, caprate, laurate, palmitate, stearate, 12-hydroxystearate, behenate, and montanate; and divalent carboxylates such as oxalate, malonate, succinate, adipate, suberate, and sebacate. These can be used alone or in combination of two or more. Among these, linear carboxylate is preferred from the viewpoint of commercial availability; monovalent carboxylate is more preferred; butyrate, caproate, caprylate, caprate, laurate, and stearate are particularly preferred; and caproate, caprylate, caprate, and laurate are especially preferred.

The carboxylate has a carboxylate anion having typically 2 to 25 carbon atoms, preferably 2 to 22, particularly preferably 4 to 20, and further preferably 6 to 18 carbon atoms from the viewpoint of productivity.

Accordingly, the metal compound belonging to the specific period d-block (B1) is preferably a zinc compound, preferably carboxylate of zinc, more preferably zinc carboxylate with an anion having 2 to 25 carbon atoms, even more preferably zinc carboxylate with an anion having 2 to 22 carbon atoms, particularly preferably zinc carboxylate with an anion having 4 to 20 carbon atoms, and especially preferably zinc carboxylate with an anion having 6 to 18 carbon atoms.

Then, the metal compound belonging to the specific period d-block (B1) has a molecular weight of typically 100 to 10000, preferably 150 to 1000, and particularly preferably 200 to 800 from the viewpoints of dispersibility in the EVOH resin composition and productivity.

Note that the metal compound belonging to the specific period d-block (B1) used in the present disclosure preferably excludes layered inorganic compounds such as montmorillonite and double salts such as hydrotalcite from the viewpoints of economic efficiency and dispersibility.

The metal compound belonging to the specific period d-block (B1) can be used in any form, for example, solid (powder, fine powder, or flakes), semisolid, liquid, paste, solution, emulsion (aqueous dispersion), or the like. Among these, the powder form is preferred for easy handling.

Additionally, the metal compound belonging to the specific period d-block (B1) can be used alone or in combination of two or more. When a plurality of kinds of the metal compounds belonging to the specific period d-block is used, the amount thereof is the sum of each mass content of the plurality of kinds of the metal compounds belonging to the specific period d-block (B1) on a metal basis.

The mass content of the metal compound belonging to the specific period d-block (B1) on a metal basis is typically 0.1 to 500 ppm, preferably 1 to 300 ppm, more preferably 3 to 200 ppm, particularly preferably 8 to 150 ppm, further preferably 10 to 100 ppm, and especially preferably 15 to 80 ppm per mass of the EVOH resin composition.

If the amount of the metal compound belonging to the specific period d-block (B1) is too large, there is a risk of disturbing thermal stability, whereas if the amount is too small, there is a risk of making the effects of the disclosure insufficient.

Note that the content ratio of the metal compound belonging to the specific period d-block (B1) is based on the **EVOH** resin composition as a final product, which contains the EVOH resin (A), the metal compound belonging to the specific period d-block (B1), the titanium compound (C), and various additives to be blended as necessary.

Then, in the present EVOH resin composition, the amount of the metal compound belonging to the specific period d-block (B1) on a metal basis can be determined, for example, by measurement using an atomic absorption photometer in which a certain volume of a test liquid is prepared by adding pure water to a solution obtained by heating and ashing the EVOH resin composition and treating the resultant with acid such as hydrochloric acid.

[Titanium Compound (C)]

Examples of the titanium compound (C) used in the present disclosure include inorganic titanium compounds and organic titanium compounds. Note that the titanium compound may be used alone or in combination of two or more. Among these, inorganic titanium compounds are preferred.

Examples of the inorganic titanium compounds include titanium oxides, titanium hydroxides, titanium chlorides, and inorganic salts of titanium.

Examples of the titanium oxides include titanium(II) oxide, titanium(III) oxide, titanium(IV) oxide, and titanium suboxide.

Examples of the titanium hydroxides include titanous hydroxide and titanic hydroxide.

Examples of the titanium chlorides include titanous chloride and titanic chloride.

Examples of the inorganic salts of titanium include titanium phosphate and titanium sulphate.

Among these, titanium oxides are preferred, titanium(IV) oxide is more preferred, and rutile titanium(IV) oxide is particularly preferred.

Examples of the organic titanium compounds include titanium carboxylates such as titanium acetate, titanium butyrate, and titanium stearate.

Note that the titanium compound (C) may be present as a titanium compound, or in an ionized form or a complex interacting with the EVOH resin or other ligands, in the EVOH resin composition.

The titanium compound (C) has an average particle diameter of typically 0.001 to 100 $\mu$m, preferably 0.01 to 50 $\mu$m, and more preferably 0.015 to 20 $\mu$m. When the average particle diameter of the titanium compound is within the above range, thermal stability tends to be further enhanced.

The amount of the titanium compound (C) on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound (C) is within the above range, thermal degradation during melt molding can be suppressed, thereby achieving excellent long-run workability. Additionally, if the amount of the titanium compound (C) is too small, a suppression effect on thermal degradation is reduced, whereas if the amount is too large, thermal decomposition of the EVOH resin easily occurs to cause coloring.

The amount of the titanium compound (C) on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

A mass ratio of the amount of the metal compound belonging to the specific period d-block (B1) to the amount of the titanium compound (C) on a metal basis is typically 0.4 to 700000, preferably 10 to 150000, and particularly preferably 50 to 55000.

The mass ratio of the amount of the metal compound belonging to the specific period d-block (B1) on a metal basis to the amount of the titanium compound (C) on a metal basis is preferably 0.03 to 50000, more preferably 1 to 10000, particularly preferably 6 to 4000, further preferably 10 to 1000, and especially preferably 15 to 500.

If the mass ratio is within the above range, coloring change due to thermal degradation can be further prevented. Additionally, if the mass ratio is too high, thermal stability tends to be disturbed, whereas if the mass ratio is too low, a molded article tends to be colored.

Here, it is generally known that an EVOH resin is degraded by heat. This is presumably because the EVOH resin is degraded by heat to generate a radical, which causes a dehydration reaction of a hydroxyl group contained in the EVOH resin to generate a double bond structure in a main chain of the EVOH resin; then, this site serves as a reaction starting point to further promote a dehydration reaction and the like to form a polyene structure in the main chain of the EVOH resin.

Furthermore, it is generally considered that when an EVOH resin composition contains a titanium compound, the EVOH resin composition is colored due to titanium ions; therefore, avoiding the use of a titanium compound is common general technical knowledge for a person skilled in the art.

However, in the present disclosure, it has been found that when using the metal compound belonging to the specific period d-block (B1) and a particular minute amount of the titanium compound (C) in combination, it is possible to produce an EVOH resin composition which significantly suppresses thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents further formation of the polyene structure. Then, it is presumed that the stabilizing effect is more effectively exerted by the titanium compound (C) due to the coexistence of the metal compound belonging to the specific period d-block (B1) and the titanium compound (C).

On the other hand, if the amount of the titanium compound (C) is too large, the titanium compound (C) is considered to cause thermal decomposition of the EVOH resin; therefore, the amount of the titanium compound (C) is limited to a particular minute amount in the present disclosure.

[Other Thermoplastic Resins]

The present EVOH resin composition can contain a thermoplastic resin(s) other than the EVOH resin (A) in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present **EVOH** resin composition may contain additives that are generally blended with the **EVOH** resin in a range that does not impair the effects of the present disclosure. Examples of the additives that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, and fatty acid esters and metal salts thereof, polyvalent phenols such as gallic acid and hydroxyl-containing phenolic aldehyde resins, terpene compounds, blends of tertiary hydrogen-containing resins and transition metals (e.g., combination of polypropylene and cobalt), blends of carbon-carbon unsaturated bond-containing resins and transition metals (e.g., combination of polybutadiene and cobalt), photo-oxidative degradable resins (e.g., polyketone), anthraquinone polymers (e.g., polyvinylanthraquinone), and polymer oxygen absorbers obtained by adding photoinitiators (e.g., benzophenone), other antioxidants, and deodorants (e.g., activated carbon) to these blends], heat stabilizers, photostabilizers, ultraviolet absorbers, colorants, antistatic agents, surfactants (except those used as lubricants), antimicrobial agents, antiblocking agents, and fillers (e.g., inorganic fillers). These compounds can be used alone or in combination of two or more.

[Method for Producing EVOH Resin Composition]

The present EVOH resin composition can be produced by mixing the EVOH resin (A), the metal compound belonging to the specific period d-block (B1), and the titanium compound (C) by any known method, for example, a dry blending method, melt mixing method, solution mixing method, or impregnation method. Among these, it is preferable that the present EVOH resin composition is produced by a method including a step of melt-mixing a composition raw material containing the EVOH resin and the titanium compound. Furthermore, these production methods can optionally be combined.

An example of the dry blending method is a method (i) in which the pelletized EVOH resin (A), the metal compound belonging to the specific period d-block (B1), and the titanium compound (C) are dry-blended by using a tumbler or the like.

Examples of the melt mixing method include: a method (ii) in which the pelletized EVOH resin (A) is dry-blended with the metal compound belonging to the specific period d-block (B1) and/or the titanium compound (C) and the resulting dry blend is melt-kneaded, thereby obtaining pellets or a molded article; and a method (iii) in which the metal compound belonging to the specific period d-block (B1) and/or the titanium compound (C) is added to and melt-kneaded with the molten EVOH resin (A) to obtain pellets or a molded article.

Examples of the solution mixing method include: a method (iv) in which the metal compound belonging to the specific period d-block (B1) and/or the titanium compound (C) is added to a solution prepared by using the pelletized EVOH resin (A), the resultant is solidified and formed into pellets, and thereafter the solids are separated from liquid in a known manner and dried; and a method (v) in which the metal compound belonging to the specific period d-block (B1) and/or the titanium compound (C) is added to a homogeneous solution (water/alcohol solution or the like) of the EVOH resin before saponification in the production process of the EVOH resin (A), the resultant is solidified and formed into pellets, and thereafter the solids are separated from liquid in a known manner and dried.

An example of the impregnation method is a method (vi) in which the pelletized EVOH resin (A) is brought into contact with an aqueous solution containing the metal compound belonging to the specific period d-block (B1) and/or the titanium compound (C) to incorporate the metal compound belonging to the specific period d-block (B1) and/or the titanium compound (C) into the EVOH resin (A), and then the resultant is dried.

Usable as the aqueous solution containing the titanium compound (C) is an aqueous solution of the titanium compound (C) or an elution of titanium ions obtained by immersing the titanium compound (C) in water containing various chemicals. The same applies to the aqueous solution containing the metal compound belonging to the specific period d-block (B1).

Note that in the impregnation method, the amounts (on a metal basis) of the metal compound belonging to the specific period d-block (B1) and the titanium compound (C) can be controlled by concentrations of the metal compound belonging to the specific period d-block (B1) and the titanium compound (C) in the aqueous solution in which the EVOH resin (A) is immersed, immersion temperature, immersion time, and the like.

The immersion time is typically 0.5 to 48 hours, preferably 1 to 36 hours, and the immersion temperature is typically 10 to 40°C, preferably 20 to 35°C.

Furthermore, various drying methods can be employed as the drying method in the respective production methods, that may be either a stationary drying method or a fluidized drying method. These can also be used in combination.

As described above, these various methods can be combined to obtain the present EVOH resin composition. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition obtained in this manner is in any form, preferably in a form of pellets.

For example, the pellets each have a spherical shape, oval shape, cylindrical shape, cubic shape, square prism shape, or the like, and typically have the oval shape or cylindrical shape. **In** view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Preferably, the pelletized **EVOH** resin (A) used in the respective production methods also has similar shape and size.

Note that when the present **EVOH** resin composition is in a form of pellets, a known lubricant is preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition suppresses thermal degradation during melt molding, and a weight loss rate of the present EVOH resin composition is typically less than 1.2%, preferably 1.1% or less, and particularly preferably 1.0% or less. The smaller the lower limit of the weight loss rate the better.

Note that the difference of 0.1% in the weight loss rate is very large because it appears as a huge difference in a yield of actual production.

The weight loss rate is determined according to the following expression by measuring the weight using a thermogravimeter (Pyris 1 TGA available from Perkin Elmer Inc.) for 5 mg of pellets of the present EVOH resin composition under a nitrogen atmosphere at a gas flow rate of 20 mL/min and a temperature of 230°C for 1 hour.

Weight loss rate (%) = [(weight before heating - weight after heating)/weight before heating] $\times$ 100     <Expression>

Furthermore, the present EVOH resin composition has a water content of typically 0.01 to 0.5% by mass, preferably 0.05 to 0.35% by mass, and particularly preferably 0.1 to 0.3% by mass.

The water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

<Expression>

$$\text{Water content (\% by mass)} = [(W_1 - W_2)/W_1] \times 100$$

The present EVOH resin composition is prepared in various forms such as powder and liquid as well as pellets, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin (A) used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, polyamide resins, polyolefin resins, polyester resins, and polystyrene resins are preferred, which are hydrophobic resins. The polyolefin resins such as polyethylene resins, polypropylene resins, polycycloolefin resins, and unsaturated carboxyl-modified polyolefin resins obtained by modifying these polyolefins are more preferred, and particularly, polycycloolefin resins are preferably used as hydrophobic resins.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the multilayer structure. The total number of layers in the present multilayer structure is typically 2 to 15, preferably 3 to 10. In the layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including a step of melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40°C to 170°C, preferably about 60°C to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include an extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging materials for general foods, condiments such as mayonnaise and dressing, fermented foods such as miso, oil and fat foods such as salad oil, beverages, cosmetics, and pharmaceutical products.

<<Second Aspect>>

**An EVOH** resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials. While such packaging materials in a sheet or film form can be made solely from the **EVOH** resin, they are usually used as a multilayer structure wherein a polyolefin resin or the like is laminated via an adhesive layer to impart water resistance, strength, or other functions.

Furthermore, unnecessary parts and defective products such as scraps and cutoff pieces of a molded article generated after producing the molded article such as a container from the multilayer structure, or scraps such as wastes generated after using the molded article for various purposes may be recovered and melt-molded, and the recovered material may be reused as a recycle layer (hereinafter sometimes referred to as "regrind layer") in at least one layer of a multilayer structure. When such recovered material is used, it is required to provide a molded article with excellent appearance while preventing coloration of the molded article and occurrence of die drool caused by a decomposition product of the EVOH resin.

To improve such poor appearance, a resin composition has been proposed, wherein the composition containing a saponified product of an ethylene-vinyl acetate copolymer and a thermoplastic resin, for example, a polyolefin resin, is blended with a higher fatty acid metal salt, hydrotalcite, or the like (see JP-A-H08-311254).

In the resin composition disclosed in JP-A-H08-311254, the poor appearance is improved to some extent but thermal degradation tends to easily occur during heating in melt kneading, melt molding, and the like. Therefore, improvement of long-run workability is required. Additionally, further improvement of quality is required for a molded article in a case of recovering and reusing the molded article.

An object of the present disclosure is to provide an EVOH resin composition which suppresses thermal degradation of an EVOH resin during heating in melt molding and the like, has excellent long-run workability, and is also suitable for reuse.

[Means for Solving the Problems]

Meanwhile, in view of the circumstances, the inventors of the present disclosure have found that an EVOH resin composition suppressing thermal degradation of an EVOH resin during heating in melt molding and the like can be obtained by adding a polyolefin resin and a particular minute amount of a titanium compound to the EVOH resin.

Specifically, the present disclosure has the following aspects.

[2-1] An EVOH resin composition comprising an EVOH resin (A), a polyolefin resin (B2), and a titanium compound (C), wherein the amount of the titanium compound (C) on a metal basis is 0.00005 ppm or more and less than 0.5 ppm per mass of the EVOH resin composition.

[2-2] The EVOH resin composition according to [2-1], wherein a mass content ratio (A)/(B2) of the EVOH resin (A) to the polyolefin resin (B2) is 1/99 to 99/1.

[2-3] The EVOH resin composition according to [2-1] or [2-2], wherein the amount of the titanium compound (C) on a metal basis is 0.001 to 3 ppm relative to total mass of the EVOH resin (A) and the titanium compound (C).

[2-4] The EVOH resin composition according to any one of [2-1] to [2-3], wherein the polyolefin resin (B2) is a polyolefin resin having a density of 0.89 g/cm$^3$ or greater.

[2-5] The EVOH resin composition according to [2-4], wherein the polyolefin resin (B2) is polypropylene.

[2-6] A multilayer structure comprising at least one layer comprising the EVOH resin composition according to any one of [2-1] to [2-5].

[2-7] A method for producing the EVOH resin composition according to any one of [2-1] to [2-5], comprising a step of melt-mixing a composition raw material comprising the EVOH resin and a titanium compound.

[2-8] A method for producing the multilayer structure according to [2-6], comprising a step of melt-molding a layer comprising the EVOH resin composition.

[Effects of the Disclosure]

The EVOH resin composition according to the present disclosure has excellent thermal stability, and thus suppresses thermal degradation of the EVOH resin during heating in melt kneading, melt molding, and the like. Particularly, the EVOH resin composition containing the polyolefin resin (B2) which has a relatively high density and excellent mechanical strength can be suitable for yielding an especially high-quality molded article.

Additionally, a multilayer structure having a layer made of the resin composition according to the present disclosure suppresses thermal degradation of the EVOH resin during heating in melt kneading, melt molding, and the like, and therefore can be suitably used as various molded articles, for example, packaging materials for food, medicines, and agricultural chemicals. Furthermore, it is capable of providing a higher-quality molded article, and is suitable for a case of preparing a molded article intended for reuse or a molded article requiring relatively high mechanical strength.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin (A), a specific polyolefin resin (B2), and a particular minute amount of a titanium compound (C).
Each component will be described below.

[EVOH Resin (A)]

The EVOH resin (A) used in the present disclosure is a resin typically obtained by saponifying an ethylene-vinyl ester copolymer which is a copolymer of ethylene and a vinyl ester monomer, and the same one as the component (A) described in the first aspect can be used.

[Polyolefin Resin (B2)]

The polyolefin resin (B2) used in the present disclosure is not particularly limited, and examples thereof include: olefin homopolymers and olefin copolymers such as linear low-density polyethylene (LLDPE), low-density polyethylene (LDPE), very-low-density polyethylene (VLDPE), medium-density polyethylene (MDPE), high-density polyethylene (HDPE), ionomer, ethylene-propylene (block or random) copolymer, ethylene-acrylic acid copolymer, ethylene-methacrylic acid copolymer, polypropylene (PP), propylene-$\alpha$-olefin ($\alpha$-olefin having 4 to 20 carbon atoms) copolymer, polybutene, polypentene, and polymethylpentene; and polyolefin resins in a broader sense, obtained by graft-modifying any of these olefin homopolymers and olefin copolymers with unsaturated carboxylic acid or an ester thereof. These can be used alone or in combination of two or more. Among these, in view of obtaining a molded article with excellent mechanical strength, polypropylene (PP), polyethylene (MDPE, HDPE), and a blend thereof are preferred. Polypropylene is particularly preferred in terms of effectiveness.
The polyolefin resin (B2) used in the present disclosure has a density of typically 0.89 g/cm$^3$ or greater, preferably 0.90 g/cm$^3$ or greater and less than 0.98 g/cm$^3$. For example, it may be used for reinforcing mechanical strength of the EVOH resin composition when a molded article obtained by using the present EVOH resin composition is to be reused. When such usage is intended, the relatively high-density polyolefin resin (B2) is preferably used for providing the resin composition with a higher density and excellent mechanical strength.
In the present EVOH resin composition, a mass content ratio (A)/(B2) of the EVOH resin (A) to the polyolefin resin (B2) is preferably 1/99 to 99/1, more preferably 2/98 to 75/25, further preferably 3/97 to 50/50, particularly preferably 4/96 to 25/75, and especially preferably 5/95 to 10/90. If the mass content ratio of the EVOH resin (A) to the olefin resin (B2) falls within the above range, a more excellent suppression effect on thermal degradation can be achieved.
Additionally, in the present EVOH resin composition, the total amount of the EVOH resin (A) and the polyolefin resin (B2) is typically 70% by mass or more, preferably 80% by mass or more, and more preferably 90% by mass or more. Note that the upper limit of the total amount of the EVOH resin (A) and the polyolefin resin (B2) corresponds to the total mass of the resin composition excluding the titanium compound (C).

[Titanium Compound (C)]

Examples of the titanium compound (C) used in the present disclosure include inorganic titanium compounds and organic titanium compounds. Note that usable as the titanium compound is the same as the component (C) described in the first aspect.
The amount of the titanium compound (C) on a metal basis is 0.00005 ppm or more and less than 0.5 ppm per mass of the EVOH resin composition. It is preferably 0.0005 to 0.3 ppm, more preferably 0.0015 to 0.2 ppm, and particularly preferably 0.005 to 0.1 ppm. When the amount of the titanium compound (C) is within the above range, thermal degradation during melt molding can be suppressed, thereby achieving excellent long-run workability. Additionally, if the amount of the titanium compound (C) is too small, a suppression effect on thermal degradation is reduced, whereas if the amount is too large, thermal decomposition of the EVOH resin (A) easily occurs to cause coloring.
The amount of the titanium compound (C) on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).
Furthermore, the amount of the titanium compound (C) on a metal basis is preferably 0.001 to 3 ppm, more preferably 0.03 to 1 ppm, and particularly preferably 0.05 to 0.5 ppm relative to the total mass of the EVOH resin (A) and the titanium compound (C).

If the amount of the titanium compound (C) is too small, the suppression effect on thermal degradation is reduced, whereas if the amount is too large, thermal decomposition of the EVOH resin (A) easily occurs to cause coloring.

Here, it is generally known that an EVOH resin is degraded by heat. Although the mechanism thereof is not clear, it is considered that the thermal degradation progresses because a double bond structure is generated in a main chain of the EVOH resin during the reaction, and this site serves as a reaction starting point to further cause a dehydration reaction to form a polyene structure in the main chain of the EVOH resin.

Meanwhile, it is considered that when an EVOH resin composition contains a titanium compound, the EVOH resin composition is colored due to titanium ions; therefore, avoiding the use of a titanium compound is common general technical knowledge for a person skilled in the art.

However, in the present disclosure, it has been found that when using the polyolefin resin (B2) and a particular minute amount of the titanium compound (C) in combination, it is possible to produce an EVOH resin composition which significantly suppresses thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents further formation of the polyene structure. Furthermore, it is presumed that the coexistence of the polyolefin resin and the titanium compound results in a number of double bond sites distributed in the resin composition, thereby preventing further formation of the double bond and improving thermal stability even more.

On the other hand, if the amount of the titanium compound (C) is too large, the titanium compound (C) is considered to cause thermal decomposition of the EVOH resin; therefore, the amount of the titanium compound (C) is limited to a particular minute amount in the present disclosure.

[Other Thermoplastic Resins]

The present EVOH resin composition can further contain other thermoplastic resin(s) as the resin component, in addition to the EVOH resin (A) and the polyolefin resin (B2), in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. Usable additives are the same as those described in the first aspect.

[Method for Producing EVOH Resin Composition]

The present EVOH resin composition is produced using the EVOH resin (A), the polyolefin resin (B2), and the titanium compound (C) as essential components, as well as the respective optional components as necessary. Examples of the production method include known methods such as a dry blending method, melt mixing method, solution mixing method, and impregnation method. Among these, it is preferable that the present EVOH resin composition is produced by a method including a step of melt-mixing a composition raw material containing the EVOH resin and the titanium compound. Furthermore, these production methods can optionally be combined.

An example of the dry blending method is a method (I) in which pellets of the EVOH resin (A), the polyolefin resin (B2), and the titanium compound (C) are dry-blended using a tumbler or the like.

Examples of the melt mixing method include: a method (II) in which the pellets of the EVOH resin (A), the polyolefin resin (B2), and the titanium compound (C) are dry-blended and the resulting dry blend is melt-kneaded, thereby obtaining pellets or other molded articles; and a method (III) in which the polyolefin resin (B2) and the titanium compound (C) are added and melt-kneaded with the molten EVOH resin (A) to obtain pellets or other molded articles.

Examples of the solution mixing method include: a method (IV) in which the polyolefin resin (B2) and/or the titanium compound (C) is blended with a solution prepared by using the pellets of the EVOH resin (A), the resultant is solidified and formed into pellets, and thereafter the solids are separated from liquid and dried; and a method (V) in which the polyolefin resin (B2) and/or the titanium compound (C) is added to an ethylene-vinyl ester copolymer solution before saponification or a homogeneous solution (water/alcohol solution, or the like) of the EVOH resin (A) after saponification in the production process of the EVOH resin (A), the resultant is solidified and formed into pellets, and thereafter the solids are separated from liquid and dried.

An example of the impregnation method is a method (VI) in which the pellets of the EVOH resin (A) are brought into contact with an aqueous solution containing the polyolefin resin (B2) and/or the titanium compound (C) to impregnate the pellets of the EVOH resin (A) with the polyolefin resin (B2) and/or the titanium compound (C), and then the resultant is dried.

Additionally, in the respective methods, it is also possible to obtain a resin composition having a desired concentration by blending the EVOH resin (A) and/or the polyolefin resin (B2) with the titanium compound (C) in predetermined proportions in advance to prepare a composition (masterbatch) having a high concentration of the titanium compound (C), and blending this composition (masterbatch) with the EVOH resin (A) or the polyolefin resin (B2).

Furthermore, in the present disclosure, the different methods can be combined. Among these, the melt mixing method, particularly the method (II) is preferred in view of productivity and ability to obtain a resin composition with more remarkable effects of the present disclosure.

Note that the pellets of the resin composition obtained by the respective methods, and the pellets containing the EVOH resin (A) and/or the polyolefin resin (B2) used in the respective methods have any shape. For example, a given shape such as a spherical shape, oval shape, cylindrical shape, cubic shape, or square prism shape can be employed. Typically, the pellets each have oval shape or cylindrical shape. In view of convenience to subsequently use the pellets as a molding material, the cylindrical shape has a bottom diameter of typically 1 to 6 mm, preferably 2 to 5 mm, and a length of typically 1 to 6 mm, preferably 2 to 5 mm. The oval shape has a major diameter of typically 1.5 to 30 mm, preferably 3 to 20 mm, and further preferably 3.5 to 10 mm. The minor diameter thereof is typically 1 to 10 mm, preferably 2 to 6 mm, and particularly preferably 2.5 to 5.5 mm. An exemplary method for measuring the major diameter and the minor diameter includes steps of: observing a pellet on a hand; measuring the major diameter using a measuring instrument such as a caliper; thereafter visually and tactually identifying a position of a maximum sectional plane orthogonal to the major diameter; and measuring the minor diameter of such sectional plane in the same manner.

Note that when the present **EVOH** resin composition is in a form of pellets, a known lubricant is preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner suppresses thermal degradation during heating, and a weight loss rate of the present EVOH resin composition is typically 1.8% or less, preferably 1.6% or less, and particularly preferably 1.5% or less. The smaller the lower limit of the weight loss rate the better.

Note that the difference of 0.1% in the weight loss rate is very large because it appears as a huge difference in a yield of actual production.

The weight loss rate is determined according to the following expression by measuring the weight using a thermogravimeter (Pyris 1 TGA available from Perkin Elmer Inc.) for 5 mg of pellets of the present EVOH resin composition under a nitrogen atmosphere at a gas flow rate of 20 mL/min and a temperature of 230°C for 1 hour.

Weight loss rate (%) = [(weight before heating - weight after heating)/weight before heating] $\times$ 100      <Expression>

Furthermore, the present EVOH resin composition has a water content of typically 0.01 to 0.5% by mass, preferably 0.05 to 0.35% by mass, and particularly preferably 0.1 to 0.3% by mass.

The water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

<Expression>

$$\text{Water content (\% by mass)} = [(W_1 - W_2)/W_1] \times 100$$

The present EVOH resin composition is prepared in various forms such as powder and liquid as well as pellets, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin (A) and the polyolefin resin (B2) used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can also be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof; ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. The polyolefin resins such as polyethylene resins, polypropylene resins, polycycloolefin resins, and unsaturated carboxyl-modified polyolefin resins obtained by modifying these polyolefins are more preferred, and particularly, polycycloolefin resins are preferably used as hydrophobic resins.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the multilayer structure. The total number of layers in the present multilayer structure is typically 2 to 15, preferably 3 to 10. In the layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these, a production method including a step of melt-molding the present EVOH resin composition layer can be employed in consideration of costs and environmental concerns. Specifically, the coextrusion method is preferred.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40°C to 170°C, preferably about 60°C to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include an extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.).

The obtained laminate can be subjected to heating process, cooling process, rolling process, printing process, dry lamination process, solution or melt coating process, bag forming process, deep drawing process, box forming process, tube forming process, splitting process, or the like as necessary.

Then, bags, cups, trays, tubes, bottles and other containers as well as caps made of films, sheets, or stretched films produced by using the present multilayer structure are useful as various packaging containers for general foods, condiments such as mayonnaise and dressing, fermented foods such as miso, oil and fat foods such as salad oil, beverages, cosmetics, and pharmaceutical products. Particularly, the present EVOH resin composition using the polyolefin resin (B2) excellent in mechanical strength is a molding resin material that is excellent in mechanical strength and even the coloration thereof due to thermal degradation is suppressed, so that it is specifically useful as a packaging material that requires high mechanical strength and beautiful appearance. Additionally, it is also useful as a packaging material that is intended to be reused because of its excellent thermal stability even after repeatedly receiving a thermal history.

<<Third Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials. However, while the EVOH is excellent in gas barrier properties, it disadvantageously tends to be brittle and less flexible because of abundant hydroxyl groups in its molecular chain and a high degree of crystallinity.

Accordingly, for applications requiring flexibility, such as for packaging a liquid, a soft resin is generally blended to impart flexibility to an EVOH-molded article.

For example, JP-A-2011-202147 proposes a resin composition having flexibility sufficient for generating no pinholes and the like and excellent molding stability even when designed to be repeatedly bent and deformed over a long period of time, such as bag-in-box, the resin composition containing: a saponified ethylene-vinyl ester copolymer (A) having an ethylene content of 20 to 60 mol%; an olefin polymer (B3); a carboxyl-modified olefin polymer (C); and a hydrocarbon resin (D) having a number average molecular weight of 100 to 3000 and a softening point of 60°C or higher and less than 170°C.

Furthermore, WO-A-2015-141610 proposes the use of a resin composition containing an ethylene-vinyl alcohol copolymer (A), an unmodified ethylene-$\alpha$-olefin copolymer (B3), an acid-modified ethylene-$\alpha$-olefin copolymer (C), and an alkali metal salt (D) at a specific blending ratio for the purpose of providing a resin composition excellent in stability for extrusion.

The resin compositions containing EVOH and the olefin polymer disclosed in JP-A-2011-202147 and WO-A-2015-141610 have excellent flexibility, but tend to be easily degraded by heat during heating in melt kneading, melt molding, and the like. Therefore, improvement of long-run workability is required.

An object of the present disclosure is to provide an EVOH resin composition having flexibility and even suppression of thermal degradation of an EVOH resin during heating in melt molding and the like.

[Means for Solving the Problems]

Meanwhile, in view of the circumstances, the inventors of the present disclosure have found that an EVOH resin composition suppresses thermal degradation of an EVOH resin during heating in melt molding and the like can be obtained by adding a specific olefin polymer and a particular minute amount of a titanium compound to the EVOH resin.

Specifically, the present disclosure has the following aspects.

[3-1] An EVOH resin composition comprising an EVOH resin (A), an olefin polymer (B3), and a titanium compound (C), wherein the olefin polymer (B3) is at least one selected from a group consisting of olefin thermoplastic elastomer, aliphatic rubber, and an ionomer, and the amount of the titanium compound (C) on a metal basis is 0.0004 ppm or more and less than 4 ppm per mass of the EVOH resin composition.

[3-2] The EVOH resin composition according to [3-1], wherein a mass content ratio (A)/(B3) of the EVOH resin (A) to the olefin polymer (B3) is 1/99 to 99/1.

[3-3] The EVOH resin composition according to [3-1] or [3-2], wherein the amount of the titanium compound (C) on a metal basis is 0.01 to 3 ppm relative to total mass of the EVOH resin (A) and the titanium compound (C).

[3-4] A melt-forming material comprising the EVOH resin composition according to any one of [3-1] to [3-3].

[3-5] A multilayer structure comprising at least one layer comprising the EVOH resin composition according to any one of [3-1] to [3-3].

[3-6] A liquid packaging material comprising the multilayer structure according to [3-5].

[3-7] A method for producing the EVOH resin composition according to any one of [3-1] to [3-3], comprising a step of melt-mixing a composition raw material comprising the EVOH resin and a titanium compound.

[3-8] A method for producing the multilayer structure according to [3-5], comprising a step of melt-molding a layer comprising the EVOH resin composition.

[Effects of the Disclosure]

The EVOH resin composition according to the present disclosure has excellent thermal stability, and thus suppresses thermal degradation of the EVOH resin during heating in melt kneading, melt molding, and the like.

Furthermore, the melt-forming material made of the resin composition according to the present disclosure suppresses thermal degradation of the EVOH resin during heating in melt kneading, melt molding, and the like; therefore, it can be suitably used as a molding material for various molded articles obtained through melt molding, for example, packaging materials for food, medicines, and agricultural chemicals, especially liquid packaging materials.

Furthermore, the multilayer structure having a layer made of the resin composition according to the present disclosure suppresses thermal degradation of the EVOH resin during heating in melt kneading, melt molding, and the like, and thus can be suitably used as various molded articles, for example, packaging materials for food, medicines, and agricultural chemicals, especially liquid packaging materials.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin (A), a specific olefin polymer (B3), and a particular minute amount of a titanium compound (C).

Each component will be described below.

[EVOH Resin (A)]

The EVOH resin (A) used in the present disclosure is a resin typically obtained by saponifying an ethylene-vinyl ester copolymer which is a copolymer of ethylene and a vinyl ester monomer, and the same one as the component (A) described in the first aspect can be used.

[Olefin Polymer (B3)]

The olefin polymer (B3) used in the present disclosure refers to a lipophilic polymer including, as a main monomer, olefin which is an aliphatic hydrocarbon monomer having a carbon-carbon double bond, the polymer generally having a number average molecular weight of 10000 or more and having a main chain consisting only of carbon bonds. Specifically, the olefin polymer (B3) is at least one selected from a group consisting of olefin thermoplastic elastomer, aliphatic rubber, and an ionomer.

Hereinafter, the olefin polymer (B3) used in the present disclosure will be described in detail.

The olefin thermoplastic elastomer refers to an elastomer resin exhibiting thermoplasticity, using polyolefin (such as polyethylene or polypropylene) as a hard segment and the aliphatic rubber (such as **EPDM** or EPM) as a soft segment, synthesized by compounding the polyolefin and the aliphatic rubber (compound type) or by introducing the aliphatic rubber during olefin polymerization (reactor type). The compound type includes a simple blend (non-crosslinked type) and a dynamically crosslinked product (two types of fully crosslinked and partially crosslinked types).

Additionally, in the present disclosure, the olefin thermoplastic resin elastomer shall include polyolefin having a relatively low density or a low degree of crystallinity, containing no rubber component but having certain flexibility. Examples of such polyolefin include: homopolymers of olefin monomers such as ethylene, propylene, and butene; and random copolymers or block copolymers of two or more kinds of olefin monomers. Particularly, examples of the olefin homopolymers include polyethylenes such as very-low-density polyethylene and (linear) low-density polyethylene, polypropylenes, polybutenes, and polymethylpentenes. Examples of the olefin block copolymers include: ethylene-$\alpha$-olefin copolymers such as ethylene-propylene copolymer, ethylene-butene copolymer, ethylene-hexene copolymer, and ethylene-octene copolymer; propylene-$\alpha$-olefin copolymers such as propylene-ethylene copolymer and propylene-butene copolymer; and butene-$\alpha$-olefin copolymers such as butene-ethylene copolymer and butene-propylene copolymer. Examples of the olefin random copolymers include copolymers showing low crystallinity obtained by random copolymerization of two or more of the aforementioned olefin monomers, for example, TAFMER™ series such as ethylene TAFMER, propylene TAFMER, and butene TAFMER available from Mitsui Chemicals, Inc.

The aliphatic rubber refers to a copolymer of an olefin monomer and a diene monomer, or a hydrogenated product thereof, which is a polymer having elastomeric elasticity. Specific examples thereof include synthetic rubbers such as ethylene-propylene rubber (EPM), ethylene-propylene-diene rubber (EPDM), isoprene rubber (IR), butadiene rubber (BR), and butyl rubber (IIR).

The ionomer refers to a metal salt of an ethylene-unsaturated carboxylic acid copolymer, where a carboxy group in the ionomer is neutralized by the metal.

To obtain a more excellent accumulated fatigue absorption effect, the olefin polymer (B3) has a density of typically less than 0.890 g/cm$^3$, particularly preferably 0.820 g/cm$^3$ or greater and less than 0.890 g/cm$^3$. Examples of the olefin polymer (B3) satisfying such conditions include a low-crystalline ethylene-$\alpha$-olefin random copolymer, EPM, and EPDM.

Furthermore, the olefin polymer (B3) has a glass transition temperature of typically -110 to 0°C, preferably -80 to -20°C, and more preferably -70 to -40°C. The olefin polymer (B3) has the glass transition temperature within the temperature range significantly lower than a room temperature and has low crystallinity, such that a resin composition to be obtained will have quite excellent flexibility in the wide temperature range extending from low temperature to a room temperature. Additionally, by blending the olefin polymer (B3) with the EVOH resin (A), a high absorption effect on accumulated fatigue can be imparted. The glass transition temperature herein means a temperature at which an amorphous region of the olefin polymer (B3) undergoes a transition from a glassy to rubbery state, and can be generally measured using a differential scanning calorimeter in conformity with JIS K 7121.

Furthermore, the olefin polymer (B3) has a melt flow rate (MFR) of typically 0.01 to 150 g/10 min, preferably 0.1 to 50 g/10 min, more preferably 1 to 25 g/10 min, and further preferably 2 to 10 g/10 min at 210°C with a load of 2160 g.

If melt viscosity of the EVOH resin (A) and melt viscosity of the olefin polymer (B3) are closer to each other, melt kneading becomes easier so as to easily yield a resin composition with the olefin polymer (B3) homogeneously dispersed in the EVOH resin (A), consequently a resin composition with excellent bending resistance and transparency. Specifically, a ratio of the MFR values (EVOH resin (A)/olefin polymer (B3)) is typically 0.1 to 10, preferably 0.3 to 4, and more preferably 0.5 to 3, as measured at 210°C with a load of 2160 g.

By blending the olefin polymer (B3) with the high-crystallinity EVOH resin (A) based on the properties such as low crystallinity or an elastomeric property, it is possible to obtain a resin composition imparted with flexibility, and as a result, it is possible to provide the composition having excellent bending resistance.

In the present EVOH resin composition, a mass content ratio (A)/(B3) of the EVOH resin (A) to the olefin polymer (B3) is preferably 1/99 to 99/1, more preferably 25/75 to 98/2, further preferably 50/50 to 97/3, particularly preferably 65/35 to 96/4, and especially preferably 75/25 to 95/5. If the mass content ratio of the EVOH resin (A) to the olefin polymer (B3) falls within the above range, a more excellent suppression effect on coloring can be achieved.

Additionally, in the present EVOH resin composition, the total amount of the EVOH resin (A) and the olefin polymer (B3) is typically 70% by mass or more, preferably 80% by mass or more, and more preferably 90% by mass or more. Note that the upper limit of the total amount of the EVOH resin (A) and the olefin polymer (B3) corresponds to the total mass of the resin composition excluding the titanium compound (C).

The olefin polymer (B3) used in the present disclosure may be an unmodified olefin polymer (B3-1) containing no polar group in the structure thereof, or a carboxyl-modified olefin polymer (B3-2) containing a carbonyl group in the structure thereof. Furthermore, the unmodified olefin polymer (B3-1) and the carboxyl-modified olefin polymer (B3-2) may be used in combination. When the unmodified olefin polymer (B3-1) and the carboxyl-modified olefin polymer (B3-2) are used in combination, the whole of them is regarded as the olefin polymer (B3).

The unmodified olefin polymer (B3-1) refers to an olefin polymer having the configuration as described above and having no modified group. The unmodified olefin polymer (B3-1) can be used alone or in combination of two or more. Among them, an ethylene-butene random copolymer is preferably used.

Note that a density and an MFR of the unmodified olefin polymer (B3-1) are the same as those of the olefin polymer (B3).

A commercial product may be used as the unmodified olefin polymer (B3-1).

Examples of the commercial product include ethylene polymers (TAFMER DF&H available from Mitsui Chemicals, Inc.), propylene polymers (TAFMER H and TAFMER XM available from Mitsui Chemicals, Inc.), butene polymers (TAFMER BL available from Mitsui Chemicals, Inc.), and the like.

Next, the carboxyl-modified olefin polymer (B3-2) will be described in detail.

The carboxyl-modified olefin polymer (B3-2) refers to a polymer obtained by modifying the olefin polymer with carboxylic acid, where the olefin polymer is a lipophilic polymer, such as polyolefin, olefin thermoplastic elastomer, aliphatic rubber, and ionomer, generally having a number average molecular weight of 10000 or more and having a main chain consisting only of carbon bonds.

Since the carboxyl-modified olefin polymer (B3-2) has a carboxy group, it has affinity for the EVOH resin (A) which has a hydroxyl group as a polar group, and further an olefin polymer portion of the carboxyl-modified olefin polymer (B3-2) has affinity for the unmodified olefin polymer (B3-1). Therefore, when the carboxyl-modified olefin polymer (B3-2) is used as the olefin polymer (B3), mixing efficiency and reaction efficiency with respect to the EVOH resin (A) tend to be enhanced. Furthermore, when the unmodified olefin polymer (B3-1) and the carboxyl-modified olefin polymer (B3-2) are used in combination, the carboxyl-modified olefin polymer (B3-2) can serve as a compatibilizer for the EVOH resin (A) and the unmodified olefin polymer (B3-1).

Here, the modification with carboxylic acid is performed by replacing a part of the monomers constituting the olefin polymer with $\alpha$, $\beta$-unsaturated carboxylic acid or an anhydride monomer thereof and copolymerizing the same, or introducing $\alpha$, $\beta$-unsaturated carboxylic acid or an anhydride monomer thereof into a part of the side chain by a graft reaction or the like.

Examples of the $\alpha$, $\beta$-unsaturated carboxylic acid or the anhydride thereof used for the modification with carboxylic acid include maleic acid, acrylic acid, itaconic acid, crotonic acid, maleic anhydride, and itaconic anhydride. Among these, maleic anhydride is suitably used.

A modification amount of the carboxyl-modified olefin polymer (B3-2) (amount of carboxylic acid for modification) is typically 0.01 to 10% by mass, preferably 0.01 to 5% by mass, particularly preferably 0.1 to 2% by mass, and further preferably 0.2 to 1% by mass of the olefin polymer as a basis. If the modification amount is too small, the resin composition to be obtained tends to have reduced compatibility, resulting in difficulty in obtaining the effects of the present disclosure, whereas if the modification amount is too large, the number of a reaction point with the hydroxyl group in the EVOH resin (A) tend to be increased, resulting in generation of a highly polymerized product in the melt kneading process to decrease formability, thermal stability, etc. during film forming.

The carboxyl-modified olefin polymer (B3-2) has a density of typically 0.85 to 0.96 $g/cm^3$, preferably 0.85 to 0.92 $g/cm^3$, and more preferably 0.85 to 0.90 $g/cm^3$.

Furthermore, the carboxyl-modified olefin polymer (B3-2) has a melt flow rate (MFR) of typically 0.01 to 150 g/10 min, preferably 0.1 to 50 g/10 min, more preferably 1 to 25 g/10 min, and further preferably 1.5 to 10 g/10 min at 210°C with a load of 2160 g.

If melt viscosity of the EVOH resin (A) and melt viscosity of the carboxyl-modified olefin polymer (B3-2) are closer to each other, melt kneading becomes easier so as to easily yield a resin composition with excellent bending resistance and transparency. Specifically, a ratio of the **MFR** values (EVOH resin(A)/carboxyl-modified olefin polymer (B3-2)) is typically 0.1 to 10, preferably 0.5 to 7.5 as measured at 210°C with a load of 2160 g.

A commercial product may be used as such carboxyl-modified olefin polymer (B3-2). Examples of the commercially available carboxyl-modified olefin polymer (B3-2) include "ADMER", "TAFMER" M series (available from Mitsui Chemicals, Inc.), "BYNEL" and "FUSABOND" (available from E.I. du Pont de Nemours and Company, Inc.), "OREVAC" (available from Arkema S.A.), "PLEXAR" (available from LyondellBasell Industries Holdings B.V.), "MODIC AP" (available from Mitsubishi Chemical Corporation), and the like.

Furthermore, the carboxyl-modified olefin polymer (B3-2) component used in the present disclosure may be a modified polymer obtained by post-modifying a part of the carboxylic acid component contained in the carboxyl-modified olefin polymer (B3-2) component with other compounds (for example, polyamide resins such as polyamide 6 and polyamide 6/12) as long as the effects of the present disclosure are not impaired.

When the unmodified olefin polymer (B3-1) and the carboxyl-modified olefin polymer (B3-2) are used in combination as the olefin polymer (B3), a mass content ratio [carboxyl-modified olefin polymer (B3-2)/unmodified olefin polymer (B3-1)] is typically 0.01 to 100, preferably 0.1 to 10, more preferably 0.3 to 5, and particularly preferably 0.5 to 2 depending on the modification rate of the carboxyl-modified olefin polymer (B3-2).

[Titanium Compound (C)]

Examples of the titanium compound (C) used in the present disclosure include inorganic titanium compounds and organic titanium compounds. Note that usable as the titanium compound is the same as the component (C) described in the first aspect.

The amount of the titanium compound (C) on a metal basis is 0.0004 ppm or more and less than 4 ppm per mass of the EVOH resin composition. It is preferably 0.004 to 3 ppm, more preferably 0.0015 to 1 ppm, and particularly preferably 0.025 to 0.5 ppm. When the amount of the titanium compound (C) is within the above range, thermal degradation during melt molding can be suppressed, thereby achieving excellent long-run workability. Additionally, if the amount of the titanium compound (C) is too small, a suppression effect on thermal degradation is reduced, whereas if the amount is too large, thermal decomposition of the EVOH resin (A) easily occurs to cause coloring.

The amount of the titanium compound (C) on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

Furthermore, the amount of the titanium compound (C) on a metal basis is preferably 0.01 to 3 ppm, more preferably 0.03 to 1 ppm, and particularly preferably 0.05 to 0.5 ppm relative to the total mass of the EVOH resin (A) and the titanium compound (C).

If the amount of the titanium compound (C) is too small, the suppression effect on thermal degradation is reduced, whereas if the amount is too large, thermal decomposition of the EVOH resin (A) easily occurs to cause coloring.

Here, it is generally known that an EVOH resin is degraded by heat. Although the mechanism thereof is not clear, it is considered that the thermal degradation progresses because a double bond structure is generated in a main chain of the EVOH resin during the reaction, and this site serves as a reaction starting point to further cause a dehydration reaction to form a polyene structure in the main chain of the EVOH resin.

Meanwhile, it is considered that when an EVOH resin composition contains a titanium compound, the EVOH resin composition is colored due to titanium ions; therefore, avoiding the use of a titanium compound is common general technical knowledge for a person skilled in the art.

However, in the present disclosure, it has been found that when using the specific olefin polymer (B3) and a particular minute amount of the titanium compound (C) in combination, it is possible to produce an EVOH resin composition which significantly suppresses thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents further formation of the polyene structure. Furthermore, it is presumed that the coexistence of the specific olefin polymer and the titanium compound results in a number of double bond sites distributed in the resin composition, thereby preventing further formation of the double bond and improving thermal stability even more.

On the other hand, if the amount of the titanium compound (C) is too large, the titanium compound (C) is considered to cause thermal decomposition of the EVOH resin; therefore, the amount of the titanium compound (C) is limited to a particular minute amount in the present disclosure.

[Other Thermoplastic Resins]

The present EVOH resin composition can further contain other thermoplastic resin(s) as the resin component, in addition to the EVOH resin (A) and the specific olefin polymer (B3), in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. Usable additives are the same as those described in the first aspect.

[Method for Producing EVOH Resin Composition]

The present EVOH resin composition is produced using the EVOH resin (A), the olefin polymer (B3), and the titanium compound (C) as essential components, as well as the respective optional components as necessary. Examples of the production method include known methods such as a dry blending method, melt mixing method, solution mixing method, and impregnation method. Among these, it is preferable that the present EVOH resin composition is produced by a method including a step of melt-mixing a composition raw material containing the EVOH resin and the titanium compound. Furthermore, these production methods can optionally be combined.

An example of the dry blending method is a method (I) in which pellets containing the EVOH resin (A) and/or the olefin polymer (B3) are dry-blended with the titanium compound (C) using a tumbler or the like.

Examples of the melt mixing method include: a method (II) in which pellets containing the EVOH resin (A) and/or the olefin polymer (B3) are dry-blended with the titanium compound (C) and the resulting dry blend is melt-kneaded, thereby obtaining pellets or other molded articles; and a method (III) in which the titanium compound (C) is added and melt-kneaded with the molten EVOH resin (A) and/or the olefin polymer (B3) to obtain pellets or other molded articles.

Examples of the solution mixing method include: a method (IV) in which the titanium compound (C) is blended with a solution prepared by using pellets containing the EVOH resin (A) and/or the olefin polymer (B3), the resultant is solidified and formed into pellets, and then the solids are separated from liquid and dried; and a method (V) in which a solution of the olefin polymer (B3) and/or the titanium compound (C) is incorporated into a homogeneous solution (water/alcohol solution, or the like) of the EVOH resin after saponification in the production process of the EVOH resin (A), the resultant is solidified and formed into pellets, and thereafter the solids are separated from liquid and dried.

An example of the impregnation method include: a method (VI) in which pellets containing the EVOH resin (A) and/or the olefin polymer (B3) are brought into contact with an aqueous solution containing the titanium compound (C) to impregnate the pellets with the titanium compound (C), and then the resultant is dried.

Additionally, in the respective methods, it is also possible to obtain a resin composition having a desired concentration by blending the EVOH resin (A) and/or the olefin polymer (B3) with the titanium compound (C) in predetermined proportions in advance to prepare a composition (masterbatch) having a high concentration of the titanium compound (C), and blending this composition (masterbatch) with the EVOH resin (A) or the olefin polymer (B3).

Furthermore, in the present disclosure, the different methods can be combined. Among these, the melt mixing method, particularly the method (II) is preferred in view of productivity and ability to obtain a resin composition with more remarkable effects of the present disclosure.

Note that the pellets of the resin composition obtained by the respective methods, and the pellets containing the EVOH resin (A) and/or the olefin polymer (B3) used in the respective methods have any shape. For example, a given shape such as a spherical shape, oval shape, cylindrical shape, cubic shape, or square prism shape can be employed. Typically, the pellets each have an oval shape or cylindrical shape. In view of convenience to subsequently use the pellets as a molding material, the cylindrical shape has a bottom diameter of typically 1 to 6 mm, preferably 2 to 5 mm, and a length of typically 1 to 6 mm, preferably 2 to 5 mm. The oval shape has a major diameter of typically 1.5 to 30 mm, preferably 3 to 20 mm, and further preferably 3.5 to 10 mm. The minor diameter thereof is typically 1 to 10 mm, preferably 2 to 6 mm, and particularly preferably 2.5 to 5.5 mm. An exemplary method for measuring the major diameter and the minor diameter includes steps of: observing a pellet on a hand; measuring the major diameter using a measuring instrument such as a caliper; thereafter visually and tactually identifying a position of a maximum sectional plane orthogonal to the major diameter; and measuring the minor diameter of such sectional plane in the same manner.

Note that when the present **EVOH** resin composition is in a form of pellets, a known lubricant is preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner suppresses thermal degradation during heating, and 5% weight loss temperature of the present EVOH resin composition is typically 355°C or higher, preferably 357°C or higher, and more preferably 358°C or higher.

The higher the upper limit of the 5% weight loss temperature the better. The upper limit is typically 450°C.

The difference of 1°C in the weight loss temperature is very large because it appears as a huge difference in a yield of actual production.

The "5% weight loss temperature" means a temperature at which the weight is reduced to 95% of the weight before measurement for 5 mg of the present EVOH resin composition, obtained by using a thermogravimeter (Pyris 1 TGA available from Perkin Elmer Inc.) under a nitrogen atmosphere at a gas flow rate of 20 mL/min and a temperature rise rate of 10 °C/min, and in a temperature range of 30 to 550°C.

Furthermore, the present EVOH resin composition has a water content of typically 0.01 to 0.5% by mass, preferably 0.05 to 0.35% by mass, and particularly preferably 0.1 to 0.3% by mass.

The water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

<Expression>

$$\text{Water content (\% by mass)} = [(W_1 - W_2)/W_1] \times 100$$

The present EVOH resin composition is prepared in various forms such as powder and liquid as well as pellets, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin (A) and the olefin polymer (B3) used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present **EVOH** resin composition layer") can be laminated with other base material(s) mainly composed of a thermoplastic resin other than the present **EVOH** resin composition (hereinafter, the resin used in the base material may be shortly referred to as "base material resin") to further impart strength, protect the present **EVOH** resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, polyamide resins, polyolefin resins, polyester resins, and polystyrene resins are preferred, which are hydrophobic resins. The polyolefin resins such as polyethylene resins, polypropylene resins, polycycloolefin resins, and unsaturated carboxyl-modified polyolefin resins obtained by modifying these polyolefins are more preferred, and particularly, polycycloolefin resins are preferably used as hydrophobic resins.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the multilayer structure. The total number of layers in the present multilayer structure is typically 2 to 15, preferably 3 to 10. In the layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these, a production method including a step of melt-molding the present EVOH resin composition layer can be employed in consideration of costs and environmental concerns. Specifically, the coextrusion method is preferred.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40°C to 170°C, preferably about 60°C to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Then, bags, cups, trays, tubes, bottles and other containers as well as caps made of films, sheets, or stretched films produced by using the present multilayer structure are useful as various packaging containers for general foods, condiments such as mayonnaise and dressing, fermented foods such as miso, oil and fat foods such as salad oil, beverages, cosmetics, and pharmaceutical products. Particularly, due to flexibility and suppressed coloration of a layer made of the present EVOH resin composition, the present EVOH resin composition and the present multilayer structure are specifically useful as packaging materials for liquid such as water, foods, pharmaceutical products, and agricultural chemicals, (for example, a bag for bag-in-box, an inner bag for pouch in dispenser, etc.).

<<Fourth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, when a packaging material having an EVOH resin layer made of an EVOH resin is subjected to hot-water sterilization treatment such as retort and boiling, the EVOH resin layer tends to elute or gas barrier properties of the EVOH resin layer tend to be decreased. To address these, a technique using a polyamide resin together is known (for example, see JP-A-2005-178324and JP-A-2009-242591).

The resin compositions containing an EVOH resin and a polyamide resin disclosed in PTL 1: JP-A-2005-178324 and JP-A-2009-242591 have excellent hot-water treatment resistance, but tend to be thermally degraded due to heating in melt kneading, melt molding, and the like. This leads to a demand for further improvement.

An object of the present disclosure is to provide an EVOH resin composition having hot-water treatment resistance and even suppression of thermal degradation of an EVOH resin during heating in melt molding and the like.

[Means for Solving the Problems]

Meanwhile, in view of the circumstances, the inventors of the present disclosure have found that an EVOH resin composition suppresses thermal degradation of an EVOH resin during heating in melt molding and the like can be obtained by adding a polyamide resin and a particular minute amount of a titanium compound to the EVOH resin.

Specifically, the present disclosure has the following aspects.

[4-1] An EVOH resin composition comprising an EVOH resin (A), a polyamide resin (B4), and a titanium compound (C),

wherein the amount of the titanium compound (C) on a metal basis is 0.001 ppm or more and less than 5 ppm per mass of the EVOH resin composition.

[4-2] The EVOH resin composition according to [4-1], wherein a mass content ratio (A)/(B4) of the EVOH resin (A) to the polyamide resin (B4) is 1/99 to 99/1.

[4-3] The EVOH resin composition according to [4-1] or [4-2], wherein the amount of the titanium compound (C) on a metal basis is 0.01 to 3 ppm relative to total mass of the EVOH resin (A) and the titanium compound (C).

[4-4] A melt-forming material comprising the EVOH resin composition according to any one of [4-1] to [4-3].

[4-5] A multilayer structure comprising at least one layer comprising the EVOH resin composition according to any one of [4-1] to [4-3].

[4-6] A hot-water sterilizable packaging material comprising the multilayer structure according to [4-5].

[4-7] A method for producing the EVOH resin composition according to any one of [4-1] to [4-3], comprising a step of melt-mixing a composition raw material comprising the EVOH resin and a titanium compound.

[4-8] A method for producing the multilayer structure according to [4-5], comprising a step of melt-molding a layer comprising the EVOH resin composition.

[Effects of the Disclosure]

The EVOH resin composition according to the present disclosure has excellent thermal stability, and thus suppresses thermal degradation of the EVOH resin during heating in melt kneading, melt molding, and the like.

Furthermore, the melt-forming material made of the resin composition according to the present disclosure has hot-water treatment resistance, and even suppression of thermal degradation of the EVOH resin during heating in melt kneading, melt molding, and the like; therefore, it can be suitably used as a molding material for various molded articles obtained through melt molding, for example, packaging materials for food, medicines, and agricultural chemicals, especially hot-water sterilizable packaging materials.

Furthermore, the multilayer structure having a layer made of the resin composition according to the present disclosure suppresses thermal degradation of the EVOH resin during heating in melt kneading, melt molding, and the like, and thus can be suitably used as various molded articles, for example, packaging materials for food, medicines, and agricultural chemicals, especially hot-water sterilizable packaging materials.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin (A), a polyamide resin (B4), and a particular minute amount of a titanium compound (C).
Each component will be described below.

[EVOH Resin (A)]

The EVOH resin (A) used in the present disclosure is a resin typically obtained by saponifying an ethylene-vinyl ester copolymer which is a copolymer of ethylene and a vinyl ester monomer, and the same one as the component (A) described in the first aspect can be used.
The amount of the EVOH resin (A) in the present EVOH resin composition is typically 1% by mass or more, preferably 10% by mass or more, more preferably 50% by mass or more, even more preferably 60% by mass or more, further preferably 70% by mass or more, and particularly preferably 85% by mass or more. Note that the upper limit of the amount of the EVOH resin (A) is typically 99% by mass. If the value is within the above range, the effects of the present disclosure tend to be more effectively achieved.

[Polyamide Resin (B4)]

The polyamide resin (B4) used in the present disclosure is a water-insoluble thermoplastic resin, and generally known ones can be used as the polyamide resin (B4).
Examples of the polyamide resin (B4) include homopolymers such as polycaproamide (nylon 6), poly-ω-aminoheptanoic acid (nylon 7), poly-ω-aminononanoic acid (nylon 9), polyundecanamide (nylon 11), and polylauryllactam (nylon 12). Furthermore, examples of a polyamide copolymer resin include: aliphatic polyamides such as polyethylenediamine adipamide (nylon 26), polytetramethylene adipamide (nylon 46), polyhexamethylene adipamide (nylon 66), polyhexamethylene sebacamide (nylon 610), polyhexamethylene dodecanamid (nylon 612), polyoctamethylene adipamide (nylon 86), polydecamethylene adipamide (nylon 108), caprolactam/lauryllactam copolymer (nylon 6/12), caprolactam/ω-aminononanoic acid copolymer (nylon 6/9), caprolactam/hexamethylenediammonium adipate copolymer (nylon 6/66), lauryllactam/hexamethylenediammonium adipate copolymer (nylon 12/66), ethylenediamine adipamide/-hexamethylenediammonium adipate copolymer (nylon 26/66), caprolactam/hexamethylenediammonium adipate/hexamethylenediammonium sebacate copolymer (nylon 66/610), and ethyleneammonium adipate/hexamethylenediammonium adipate/hexamethylenediammonium sebacate copolymer (nylon 6/66/610); aromatic polyamides such as polyhexamethylene isophthalamide, polyhexamethylene terephthalamide, poly-m-xylylene adipamide, hexamethylene isophthalamide/terephthalamide copolymer, poly-p-phenylene terephthalamide, and poly-p-phenylene-3,4'-diphenyl ether terephthalamide; amorphous polyamides; polyamide resins obtained by modifying any of these polyamide resins with aromatic amine such as methylenebenzylamine or m-xylene diamine, and m-xylylenediammonium adipate, or terminal-modified polyamide resins thereof. Among these, terminal-modified polyamide resins are preferred. Such polyamide resin (B4) can be used alone or in combination of two or more.
The polyamide resin (B4) tends to have higher bonding force to a resin having a polar group, such as the EVOH resin (A). Accordingly, the resin composition containing the EVOH resin (A) and the polyamide resin (B4) is preferably used for improving humidity resistance of a multilayer structure in which a layer made of this resin composition and a layer made of other thermoplastic resin(s) are laminated.
A proportion of an amide bond in an amide monomer unit constituting the polyamide resin (B4), as calculated as a molecular weight percentage of the amide monomer unit (for example, an amide bond (-CONH-) in $[-C_6H_5-CONH-]$ in the case of nylon 6), is preferably 20 to 60%, more preferably 30 to 50%, and particularly preferably 35 to 45%. If the amide bond percentage is too small, the bonding force tends to be easily reduced at an interface with the polar resin such as the EVOH resin (A), whereas if the percentage is too large, reactivity with the polar resin such as the EVOH resin (A) during melt molding tends to be excessively strong, causing poor appearance due to a rough bonding interface in coextrusion.
Furthermore, the polyamide resin (B4) has a melting point of preferably 160 to 270°C, more preferably 175 to 250°C, and particularly preferably 190 to 230°C. If the melting point of the polyamide resin (B4) is too low, heat resistance tends to be reduced in a multilayer structure to be formed. On the other hand, if the melting point of the polyamide resin (B4) is too high, it tends to be greatly different from a melting point of a resin used in the other resin layer (when included in the multilayer structure). This tends to generate a turbulent layer upon confluence in a case of coextrusion with the other resin, resulting in poorer appearance of a multilayer structure to be formed. Further, upon coextrusion with the EVOH resin (A), a die temperature is so high that there is a risk of facilitating coloration due to thermal degradation of the EVOH resin (A).

From the viewpoints of the above, the preferable polyamide resin (B4) has a melting point of 160 to 270°C, preferably 175 to 250°C, and particularly preferably 190 to 230°C, and the percentage of the amide bond is 20 to 60%, preferably 30 to 50%, and particularly preferably 35 to 45%. Specifically, for example, nylon 6 (melting point: about 225°C, amide bond percentage: 38%) and nylon 6/66 (melting point: about 195°C, amide bond percentage: 38%) are preferred.

Generally, a polymerization degree of the polyamide resin (B4) can be represented as relative viscosity, which is, in general, preferably 1.5 to 6, more preferably 2.0 to 6, and further preferably 2.5 to 5. This is because, if the relative viscosity is too small, an extruder tends to be in a high torque state during molding, causing difficulty in extrusion processing, and if the relative viscosity is too great, a film or a sheet to be obtained tends to have reduced thickness accuracy. Note that the relative viscosity can be measured in conformity with JIS K 6933, by completely dissolving 1 g of the polyamide resin in 100 mL of 96% concentrated sulfuric acid, followed by measurement at 25°C using a capillary viscometer.

In the present EVOH resin composition, a mass content ratio (A)/(B4) of the EVOH resin (A) to the polyamide resin (B4) is preferably 1/99 to 99/1, more preferably 10/99 to 99/1, further preferably 50/50 to 98/2, yet further preferably 60/40 to 95/5, particularly preferably 70/30 to 95/5, and especially preferably 75/25 to 95/5. If the mass content ratio of the polyamide resin (B4) is too small, the effect of blending the polyamide resin (B4) (for example, hot-water sterilization treatment resistance) tends to be decreased in a molded article to be obtained, whereas if the mass content ratio is too great, gas barrier properties tend to be decreased.

Additionally, in the present EVOH resin composition, the total amount of the EVOH resin (A) and the polyamide resin (B4) is typically 70% by mass or more, preferably 80% by mass or more, and more preferably 90% by mass or more. Note that the upper limit of the total amount of the EVOH resin (A) and the polyamide resin (B4) corresponds to the total mass of the resin composition excluding the titanium compound (C).

[Titanium Compound (C)]

Examples of the titanium compound (C) used in the present disclosure include inorganic titanium compounds and organic titanium compounds. Note that usable as the titanium compound is the same as the component (C) described in the first aspect.

The amount of the titanium compound (C) on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound (C) is within the above range, thermal degradation during melt molding can be suppressed, thereby achieving excellent long-run workability. Additionally, if the amount of the titanium compound (C) is too small, a suppression effect on thermal degradation is reduced, whereas if the amount is too large, thermal decomposition of the EVOH resin (A) easily occurs to cause coloring.

The amount of the titanium compound (C) on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

Furthermore, the amount of the titanium compound (C) on a metal basis is preferably 0.01 to 3 ppm, more preferably 0.03 to 1 ppm, and particularly preferably 0.05 to 0.5 ppm relative to the total mass of the EVOH resin (A) and the titanium compound (C).

If the amount of the titanium compound (C) is too small, the suppression effect on thermal degradation is reduced, whereas if the amount is too large, thermal decomposition of the EVOH resin (A) easily occurs to cause coloring.

Here, it is generally known that an EVOH resin is degraded by heat, and when blended with a polyamide resin, the EVOH resin is degraded by heat more easily and further exhibits thickening tendency during heating. Although the mechanism thereof is not clear, it is presumed that thickening is caused by reaction between the blended polyamide resin and the EVOH resin composition. Furthermore, it is considered that thermal degradation progresses because a double bond structure is generated in a main chain of the **EVOH** resin during the reaction, and this site serves as a reaction starting point to further cause a dehydration reaction to form a polyene structure in the main chain of the EVOH resin.

Meanwhile, it is considered that when an EVOH resin composition contains a titanium compound, the EVOH resin composition is colored due to titanium ions; therefore, avoiding the use of a titanium compound is common general technical knowledge for a person skilled in the art.

However, in the present disclosure, it has been found that when using the polyamide resin (B4) and a particular minute amount of the titanium compound (C) in combination, it is possible to produce an EVOH resin composition which significantly suppresses thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents further formation of the polyene structure. Furthermore, it is presumed that the coexistence of the polyamide resin and the titanium compound suppresses the reaction between the polyamide resin and the EVOH resin composition, thereby suppressing thickening tendency as well as further improving thermal stability.

On the other hand, if the amount of the titanium compound (C) is too large, the titanium compound (C) is considered to cause thermal decomposition of the EVOH resin; therefore, the amount of the titanium compound (C) is limited to a particular minute amount in the present disclosure.

[Other Thermoplastic Resins]

The present EVOH resin composition can further contain other thermoplastic resin(s) as the resin component, in addition to the EVOH resin (A) and the polyamide resin (B4), in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. Usable additives are the same as those described in the first aspect.

[Method for Producing EVOH Resin Composition]

The present EVOH resin composition is produced using the EVOH resin (A), the polyamide resin (B4), and the titanium compound (C), as well as the optional components to be blended as necessary. Examples of the production method include known methods such as a dry blending method, melt mixing method, solution mixing method, and impregnation method. Among these, it is preferable that the present EVOH resin composition is produced by a method including a step of melt-mixing a composition raw material containing the EVOH resin and the titanium compound. Furthermore, these production methods can optionally be combined.

An example of the dry blending method is a method (I) in which pellets containing the EVOH resin (A) and/or the polyamide resin (B4) are dry-blended with the titanium compound (C) using a tumbler or the like.

Examples of the melt mixing method include: a method (II) in which pellets containing the EVOH resin (A) and/or the polyamide resin (B4) are dry-blended with the titanium compound (C) and the resulting dry blend is melt-kneaded, thereby obtaining pellets or other molded articles; and a method (III) in which the titanium compound (C) is added and melt-kneaded with the molten EVOH resin (A) and/or the polyamide resin (B4) to obtain pellets or other molded articles; and a method in which the titanium compound (C) is incorporated into the EVOH resin (A) and/or the polyamide resin (B4), the resulting EVOH resin (A) and/or the polyamide resin (B4) is used to form pellets having a core-sheath structure with a core of the EVOH resin (A) and a sheath of the polyamide resin (B4) or pellets having a core-sheath structure with a core of the EVOH resin (A) and a sheath of the polyamide resin (B4), and then the pellets are subjected to melt molding.

Examples of the solution mixing method include: a method (IV) in which the titanium compound (C) is blended with a solution prepared by using pellets containing the commercially available EVOH resin (A) and/or the polyamide resin (B4), the resultant is solidified and formed into pellets, and then the solids are separated from liquid and dried; and a method (V) in which a solution of the polyamide resin (B4) and/or the titanium compound (C) is incorporated into a homogeneous solution (water/alcohol solution, or the like) of EVOH after saponification in the production process of the EVOH resin (A), the resultant is solidified and formed into pellets, and thereafter the solids are separated from liquid and dried.

An example of the impregnation method is a method (VI) in which pellets containing the EVOH resin (A) and/or the polyamide resin (B4) are brought into contact with an aqueous solution containing the titanium compound (C) to impregnate the pellets with the titanium compound (C), and then the resultant is dried.

Additionally, in the respective methods, it is also possible to obtain a resin composition having a desired concentration by blending the EVOH resin (A) and/or the polyamide resin (B4) with the titanium compound (C) in predetermined proportions in advance to prepare a composition (masterbatch) having a high concentration of the titanium compound (C), and blending this composition (masterbatch) with the EVOH resin (A) or the polyamide resin (B4).

Furthermore, in the present disclosure, the different methods can be combined. Among these, the melt mixing method, particularly the method (II) is preferred in view of productivity and ability to obtain a resin composition with more remarkable effects of the present disclosure.

Furthermore, when the respective optional components are blended with the resin composition, they can be blended with the resin composition in accordance with the respective production methods.

Note that the pellets of the resin composition obtained by the respective methods, and the pellets containing the EVOH resin (A) and/or the polyamide resin (B4) used in the respective methods have any shape. For example, a given shape such as a spherical shape, oval shape, cylindrical shape, cubic shape, or square prism shape can be employed. Typically, the pellets each have an oval shape or cylindrical shape. In view of convenience to subsequently use the pellets as a molding material, the cylindrical shape has a bottom diameter of typically 1 to 6 mm, preferably 2 to 5 mm, and a length of typically 1 to 6 mm, preferably 2 to 5 mm. The oval shape has a major diameter of typically 1.5 to 30 mm, preferably 3 to 20 mm, and further preferably 3.5 to 10 mm. The minor diameter thereof is typically 1 to 10 mm, preferably 2 to 6 mm, and particularly preferably 2.5 to 5.5 mm. An exemplary method for measuring the major diameter and the minor diameter includes steps of: observing a pellet on a hand; measuring the major diameter using a measuring instrument such as a caliper; thereafter visually and tactually identifying a position of a maximum sectional plane orthogonal to the major diameter; and measuring the minor diameter of such sectional plane in the same manner.

Note that when the present EVOH resin composition is in a form of pellets, a known lubricant is preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner suppresses thermal degradation during heating, and 5% weight loss temperature of the present EVOH resin composition is typically 340°C or higher, preferably 341°C or higher, and particularly preferably 342°C or higher. Additionally, 10% weight loss temperature of the present EVOH resin composition is typically 360°C or higher, preferably 361°C or higher, and particularly preferably 362°C or higher.

The higher the upper limit of the 5% weight loss temperature or the 10% weight loss temperature the better. The upper limit is typically 450°C.

The difference of 1°C in the weight loss temperature is very large because it appears as a huge difference in a yield of actual production.

The "5% weight loss temperature" and the "10% weight loss temperature" mean a temperature at which the weight is reduced to 95% of the weight before measurement (5% weight loss temperature) and a temperature at which the weight is reduced to 90% of the weight before measurement (10% weight loss temperature) for 5 mg of the present EVOH resin composition, obtained by using a thermogravimeter (Pyris 1 TGA available from Perkin Elmer Inc.) under a nitrogen atmosphere at a gas flow rate of 20 mL/min and a temperature rise rate of 10 °C/min, and in a temperature range of 30 to 550°C.

Furthermore, the present EVOH resin composition has a water content of typically 0.01 to 0.5% by mass, preferably 0.05 to 0.35% by mass, and particularly preferably 0.1 to 0.3% by mass.

The water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

<Expression>

$$\text{Water content (\% by mass)} = [(W_1 - W_2)/W_1] \times 100$$

The present EVOH resin composition is prepared in various forms such as powder and liquid as well as pellets, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin (A) and the polyamide resin (B4) used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter, the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, polyamide resins, polyolefin resins, polyester resins, and polystyrene resins are preferred, which are hydrophobic resins. The polyolefin resins such as polyethylene resins, polypropylene resins, polycycloolefin resins, and unsaturated carboxyl-modified polyolefin resins obtained by modifying these polyolefins are more preferred, and particularly, polycycloolefin resins are preferably used as hydrophobic resins.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the multilayer structure. The total number of layers in the present multilayer structure is typically 2 to 15, preferably 3 to 10. In the layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these, a production method including a step of melt-molding the present EVOH resin composition layer can be employed in consideration of costs and environmental concerns. Specifically, the coextrusion method is preferred.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40°C to 170°C, preferably about 60°C to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include an extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging materials for general foods, condiments such as mayonnaise and dressing, fermented foods such as miso, oil and fat foods such as salad oil, beverages, cosmetics, and pharmaceutical products. Particularly, the present EVOH resin composition layer is excellent in hot-water treatment resistance and thermal stability, and thus especially useful as hot-water sterilizable packaging materials for foods, medicines, agricultural chemicals, etc.

<<Fifth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the problem, for example, WO-A-2013-146961 discloses incorporation of an unsaturated aldehyde into an EVOH resin to suppress oxidative degradation of the EVOH resin in melt molding and suppress coloring.

However, an aldehyde compound such as the unsaturated aldehyde even in a very small amount may cause an offensive odor, and there is a concern that the aldehyde compound is exposed to high temperature during a molding process and evaporates, making working environment worse. Furthermore, it cannot be deemed that the improvement effect on long-run moldability, such as suppression of oxidative degradation during heating in melt kneading, melt molding, and the like, is sufficient. Therefore, there is a strong demand for an EVOH resin composition that does not worsen the working environment, is hardly thermally degraded during heating, and can yield a high-quality molded article.

An object of the present disclosure is to provide an EVOH resin composition supressing thermal degradation of an EVOH resin during heating in melt molding and the like.

[Means for Solving the Problems]

Meanwhile, in view of the circumstances, the inventors of the present disclosure have found that an EVOH resin composition suppresses thermal degradation of an EVOH resin during heating in melt molding and the like can be obtained by adding a styrene derivative having a substituent at an $\alpha$-position and a particular minute amount of a titanium compound to the EVOH resin.

Specifically, the present disclosure has the following aspects.

[5-1] An EVOH resin composition comprising an EVOH resin (A), a styrene derivative having a substituent at an $\alpha$-position (B5), and a titanium compound (C),
wherein the amount of the titanium compound (C) on a metal basis is 0.001 ppm or more and less than 5 ppm per mass of the EVOH resin composition.
[5-2] The EVOH resin composition according to [5-1], wherein the amount of the styrene derivative having a substituent at an $\alpha$-position (B5) is 1 to 10000 ppm per mass of the EVOH resin composition.
[5-3] The EVOH resin composition according to [5-1] or [5-2], wherein a mass ratio of the amount of the styrene derivative having a substituent at an $\alpha$-position (B5) to the amount of the titanium compound (C) on a metal basis is 0.2 to 10000000.
[5-4] The EVOH resin composition according to any one of [5-1] to [5-3], wherein the styrene derivative having a substituent at an $\alpha$-position (B5) is an $\alpha$-methylstyrene derivative.
[5-5] Pellets comprising the EVOH resin composition according to any one of [5-1] to [5-4].
[5-6] A multilayer structure comprising at least one layer comprising the EVOH resin composition according to any one of [5-1] to [5-4].
[5-7] A method for producing the EVOH resin composition according to any one of [5-1] to [5-4], comprising a step of melt-mixing a composition raw material comprising the EVOH resin and a titanium compound.
[5-8] A method for producing the multilayer structure according to [5-6], comprising a step of melt-molding a layer comprising the EVOH resin composition.

[Effects of the Disclosure]

The EVOH resin composition according to the present disclosure has excellent thermal stability, and thus suppresses thermal degradation of the EVOH resin during melt molding.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin (A) as a main component, a styrene derivative having a substituent at an $\alpha$-position (B5), and a particular minute amount of a titanium compound (C).

Specifically, the present EVOH resin composition contains the EVOH resin (A) as a base resin, where the amount of the EVOH resin (A) in the present EVOH resin composition is typically 70% by mass or more, preferably 80% by mass or more, more preferably 90% by mass or more, and particularly preferably 95% by mass or more.

Each component will be described below.

[EVOH resin (A)]

The EVOH resin (A) used in the present disclosure is a resin typically obtained by saponifying an ethylene-vinyl ester copolymer which is a copolymer of ethylene and a vinyl ester monomer, and the same one as the component (A) described in the first aspect can be used.

[Styrene Derivative Having a Substituent at an $\alpha$-Position (B5)]

The styrene derivative having a substituent at an $\alpha$-position (which hereinafter may be referred to as "specific styrene derivative") (B5) used in the present disclosure is an aromatic compound capable of resonance stabilizing and capturing a radical, the compound especially having a styrene molecular structure as a molecular skeleton and having a substituent at an $\alpha$-position.

Examples of the specific styrene derivative (B5) include $\alpha$-methylstyrene derivatives, specifically such as $\alpha$-methylstyrene, 4-t-butylstyrene, 4-methoxystyrene, 2-acetoxystyrene, and 2,4-diphenyl-4-methyl-1-pentene. Among these, 2,4-diphenyl-4-methyl-1-pentene which has a benzylic position so as to resonance stabilize a radical is suitable in terms of the effects of the present disclosure, i.e. suppression of thermal degradation.

The specific styrene derivative (B5) has a molecular weight of typically 100 to 100000, preferably 100 to 10000, particularly preferably 100 to 1000, and especially preferably 130 to 300. If the molecular weight falls within the above range, the effects of the present disclosure tend to be more efficiently achieved.

The amount of the specific styrene derivative (B5) is preferably 1 to 10000 ppm, more preferably 100 to 8000 ppm, particularly preferably 300 to 5000 ppm, further preferably 500 to 4000 ppm, and especially preferably 1000 to 3000 ppm per mass of the present EVOH resin composition. If the amount is too large, productivity tends to be reduced, whereas if the amount is too small, thermal stability tends to be reduced.

Note that a content ratio of the specific styrene derivative (B5) is based on the EVOH resin composition as a final product, which contains the EVOH resin (A), the specific styrene derivative (B5), the titanium compound (C), and various additives to be blended as necessary.

The amount of the specific styrene derivative (B5) in the present EVOH resin composition can be measured, for example, by using thermal desorption-cooled injection-gas chromatography/mass spectrometry (TD-CI-GC/MS) in accordance with the following conditions.

<Measurement Method of Styrene Derivative (B5) Amount>

[TD-CI-GC/MS Measurement Conditions]

(TDS Conditions)

Equipment for use: TDS-2 [available from GERSTEL GmbH & Co.KG]
Sample mode: standby cooling
Flow mode: splitless
Standby temp: 20°C
Transfer temp: 250°C
Initial temp: 20°C
Initial time: 4 min
1st rate: 60 °C/min
1st final temp: 200°C
1st final time: 60 min

(CIS Conditions)

Equipment for use: CIS-4 [available from GERSTEL GmbH & Co.KG]
Initial temp: -150°C
Initial time: 1 min
1st rate: 12 °C/sec
1st final temp: 250°C
1st final time: 5 min
equilib. time: 0.5 min
(split rate: 30:1)

(GC/MS Conditions)

Equipment for use: Quadrupole 7890A(GC)-5977(MS) [available from Agilent Technologies, Inc.]
Column: DB-WAX [available from Agilent Technologies, Inc.]

$$\text{length} \times \text{inner diameter} \times \text{film thickness} = 30 \text{ m} \times 0.25 \text{ mm} \times 0.25 \text{ μm}$$

Temperature: OVEN 40°C (5 min hold) - Rate 10 °C/min - 250°C (10 min hold)
INJ250°C AUX250°C
Carrier gas: He (Flow 1 mL/min, constant flow)
Split rate: 30:1
Measurement mode: SIM (m/z = 91,119,236)
Solvent wait time: 10 min

[Titanium Compound (C)]

Examples of the titanium compound (C) used in the present disclosure include inorganic titanium compounds and organic titanium compounds. Note that usable as the titanium compound is the same as the component (C) described in the first aspect.

The amount of the titanium compound (C) on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound (C) is within the above range, thermal degradation during melt molding can be suppressed, thereby achieving excellent long-run workability. Additionally, if the amount of the titanium compound (C) is too small, a suppression effect on thermal degradation is reduced, whereas if the amount is too large, thermal decomposition of the EVOH resin easily occurs to cause coloring.

The amount of the titanium compound (C) on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

The mass ratio of the amount of the specific styrene derivative (B5) to the amount of the titanium compound (C) on a metal basis is preferably 0.2 to 10000000, more preferably 0.3 to 1000000, further preferably 100 to 270000, yet further preferably 600 to 100000, particularly preferably 800 to 50000, and especially preferably 1000 to 30000.

If the value is too large, UV absorption ability of the present EVOH resin composition tends to be decreased, whereas if the value is too small, thermal stability tends to be reduced.

Here, it is generally known that an EVOH resin is degraded by heat. This is presumably because of the following. That is, the EVOH resin is degraded by heat to generate a radical, which causes a dehydration reaction of a hydroxyl group contained in the EVOH resin to generate a double bond structure in a main chain of the EVOH resin. Then, this site serves as a reaction starting point to further cause a dehydration reaction and the like to form a polyene structure in the main chain of the EVOH resin.

Meanwhile, it is generally considered that when an EVOH resin composition contains a titanium compound, the EVOH resin composition is colored due to titanium ions; therefore, avoiding the use of a titanium compound is common general technical knowledge for a person skilled in the art.

However, in the present disclosure, it has been found that when using the specific styrene derivative (B5) and a particular minute amount of the titanium compound (C) in combination, it is possible to produce an EVOH resin composition which significantly suppresses thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents further formation of the polyene structure. Then, it is presumed that the stabilizing effect is more effectively exerted by the titanium compound (C) due to the coexistence of the specific styrene derivative (B5) and the titanium compound (C).

On the other hand, if the amount of the titanium compound (C) is too large, the titanium compound (C) is considered to cause thermal decomposition of the EVOH resin; therefore, the amount of the titanium compound (C) is limited to a particular minute amount in the present disclosure.

[Other Thermoplastic Resins]

The present EVOH resin composition can contain a thermoplastic resin(s) other than the EVOH resin (A) in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the present disclosure. Usable additives are the same as those described in the first aspect.

[Method for Producing EVOH Resin Composition]

The present EVOH resin composition can be produced by mixing the EVOH resin (A), the specific styrene derivative (B5), and the titanium compound (C) by any known method, for example, a dry blending method, melt mixing method, solution mixing method, or impregnation method. Among these, it is preferable that the present EVOH resin composition is produced by a method including a step of melt-mixing a composition raw material containing the EVOH resin and the titanium compound. Furthermore, these production methods can optionally be combined.

An example of the dry blending method is a method (i) in which the pelletized EVOH resin (A), the specific styrene derivative (B5), and the titanium compound (C) are dry-blended using a tumbler or the like.

Examples of the melt mixing method include: a method (ii) in which the pelletized EVOH resin (A) is dry-blended with the specific styrene derivative (B5) and the titanium compound (C) and the resulting dry blend is melt-kneaded, thereby obtaining pellets or a molded article; and a method (iii) in which the specific styrene derivative (B5) and/or the titanium compound (C) is added and melt-kneaded with the molten EVOH resin (A) to obtain pellets or a molded article.

Examples of the solution mixing method include: a method (iv) in which the specific styrene derivative (B5) and/or the titanium compound (C) is blended with a solution prepared by using the pelletized EVOH resin (A), the resultant is solidified and formed into pellets, and thereafter the solids are separated from liquid in a known manner and dried; a method (v) in which the specific styrene derivative (B5) and/or the titanium compound (C) is incorporated into a homogeneous solution (water/alcohol solution, or the like) of the EVOH resin before saponification in the production process of the EVOH resin (A), the resultant is solidified and formed into pellets, and thereafter the solids are separated from liquid in a known manner and dried.

An example of the impregnation method is a method (vi) in which the pelletized EVOH resin (A) is brought into contact with an aqueous solution containing the specific styrene derivative (B5) and/or the titanium compound (C) to incorporate the specific styrene derivative (B5) and/or the titanium compound (C) in the EVOH resin (A), and then the resultant is dried.

Usable as the aqueous solution containing the titanium compound (C) is an aqueous solution of the titanium compound (C) or an elution of titanium ions obtained by immersing the titanium compound (C) in water containing various chemicals. The same applies to the aqueous solution containing the specific styrene derivative (B5).

Note that in the impregnation method, the amounts (on a metal basis) of the specific styrene derivative (B5) and the titanium compound (C) can be controlled by the concentrations of the specific styrene derivative (B5) and the titanium compound (C) in the aqueous solution in which the EVOH resin (A) is immersed, immersion temperature, immersion time, and the like.

The immersion time is typically 0.5 to 48 hours, preferably 1 to 36 hours, and the immersion temperature is typically 10 to 40°C, preferably 20 to 35°C.

Furthermore, various drying methods can be employed as the drying method in the respective production methods, that may be either a stationary drying method or a fluidized drying method. These can also be used in combination.

As described above, these various methods can be combined to obtain the present EVOH resin composition. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition obtained in this manner is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and further preferably 2.5 to 5.5 mm, and a major diameter of typically 1.5 to 30 mm, preferably 3 to 20 mm, and further preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Preferably, the pelletized EVOH resin (A) used in the respective production methods also has similar shape and size.

Note that when the present EVOH resin composition is in a form of pellets, a known lubricant is preferably applied onto the surface of the pellets to stabilize a feed property during melt molding. Exemplary types of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner suppresses thermal degradation during heating, and 5% weight loss temperature of the present EVOH resin composition is typically 330°C or higher, preferably 331°C or higher. Additionally, 10% weight loss temperature of the present EVOH resin composition is typically 351°C or higher, preferably 352°C or higher, and particularly preferably 353°C or higher.

The higher the upper limit of the 5% weight loss temperature or the 10% weight loss temperature the better. The upper limit is typically 450°C.

The difference of 1°C in the weight loss temperature is very large because it appears as a huge difference in a yield of actual production.

The "5% weight loss temperature" and the "10% weight loss temperature" mean a temperature at which the weight is reduced to 95% of the weight before measurement (5% weight loss temperature) and a temperature at which the weight is reduced to 90% of the weight before measurement (10% weight loss temperature) for 5 mg of the present EVOH resin composition, obtained by using a thermogravimeter (Pyris 1 TGA available from Perkin Elmer Inc.) under a nitrogen atmosphere at a gas flow rate of 20 mL/min and a temperature rise rate of 10 °C/min, and in a temperature range of 30 to 550°C.

Furthermore, the present EVOH resin composition has a water content of typically 0.01 to 0.5% by mass, preferably 0.05 to 0.35% by mass, and particularly preferably 0.1 to 0.3% by mass.

The water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

\<Expression\>

$$\text{Water content (\% by mass)} = [(W_1 - W_2)/W_1] \times 100$$

The present EVOH resin composition is prepared in various forms such as powder and liquid as well as pellets, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin (A) used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter, the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-α-olefin (α-olefin having 4 to 20 carbon atoms) copolymers, polypropylene resins such as polypropylenes and propylene-α-olefin (α-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones.

Among these, polyamide resins, polyolefin resins, polyester resins, and polystyrene resins are preferred, which are hydrophobic resins. The polyolefin resins such as polyethylene resins, polypropylene resins, polycycloolefin resins, and unsaturated carboxyl-modified polyolefin resins obtained by modifying these polyolefins are more preferred, and particularly, polycycloolefin resins are preferably used as hydrophobic resins.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the multilayer structure. The total number of layers in the present multilayer structure is typically 2 to 15, preferably 3 to 10. In the layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these, a production method including a step of melt-molding the present EVOH resin composition layer can be employed in consideration of costs and environmental concerns. Specifically, the coextrusion method is preferred.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40°C to 170°C, preferably about 60°C to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging materials for general foods, condiments such as mayonnaise and dressing, fermented foods such as miso, oil and fat foods such as salad oil, beverages, cosmetics, and pharmaceutical products.

EXAMPLES

Hereinafter, the present disclosure will be described more specifically with reference to examples. However, the present disclosure is not limited to the following examples. In the examples, "parts" means parts on a mass basis unless otherwise specified.

<<First Aspect>>

<Example 1-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin (A).

Additionally, zinc stearate (Zn-St available from Nitto Chemical Industry Co., Ltd) was used as the metal compound belonging to the specific period d-block (B1), and titanium oxide (available from FUJIFILM Wako Pure Chemical Corporation) was used as the titanium compound (C).

A mixture was prepared by dry-blending the zinc stearate in the amount of 45 ppm on a metal basis per mass of an EVOH resin composition and the titanium oxide in the amount of 0.1 ppm on a metal basis per mass of the EVOH resin composition with the pellets of the EVOH resin (A). Then, the mixture was fed to a twin-screw extruder (20 mm in diameter) equipped with a two-hole die, and a strand extruded and ejected under the following extrusion conditions was cooled by air and solidified. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 1-2>

Pellets of an EVOH resin composition were obtained in the same manner as in Example 1-1 except that the blending amount of the titanium oxide on a metal basis in Example 1-1 was changed to 1 ppm per mass of the EVOH resin composition.

<Comparative Example 1-1>

Pellets of an EVOH resin composition were obtained in the same manner as in Example 1-1 except that the titanium oxide in Example 1-1 was not used.

<Comparative Example 1-2>

Pellets of an EVOH resin composition were obtained in the same manner as in Example 1-1 except that the blending amount of the titanium oxide on a metal basis in Example 1-1 was changed to 10 ppm per mass of the EVOH resin composition.

The pellets of the EVOH resin composition obtained in Examples 1-1 and 1-2 and Comparative Examples 1-1 and 1-2 were evaluated for thermal stability as described below. The results are listed in Table 1-1 below.

[Thermal Stability Evaluation]

The weight loss rate was determined according to the following expression by measuring the weight using a thermogravimeter (Pyris 1 TGA available from Perkin Elmer Inc.) for 5 mg of the obtained pellets of the EVOH resin composition under a nitrogen atmosphere at a gas flow rate of 20 mL/min and a temperature of 230°C for 1 hour. The lower value means that the resin composition was less decomposed, that is, the resin composition exhibited better thermal stability.

Weight loss rate (%) = [(weight before heating - weight after heating)/weight before heating] $\times$ 100        <Expression>

Table 1-1

| | Amount of metal compound belonging to specific period d-block (B1) on metal basis (ppm) | Amount of titanium compound (C) on metal basis (ppm) | Amount of metal compound belonging to specific period d-block (B1) on metal basis/ Amount of titanium compound (C) on metal basis | Thermal stability evaluation |
| | | | | Weight loss rate (%) |
|---|---|---|---|---|
| Example 1-1 | 45 | 0.1 | 450 | 1.0 |
| Example 1-2 | 45 | 1 | 45 | 1.1 |
| Comparative example 1-1 | 45 | 0 | - | 1.2 |
| Comparative example 1-2 | 45 | 10 | 4.5 | 1.4 |

As shown in Table 1-1, the EVOH resin compositions each containing the metal compound belonging to the specific period d-block (B1) and a particular minute amount of the titanium compound (C) in Examples 1-1 and 1-2 have the smaller weight loss rate and better thermal stability as compared to the EVOH resin composition containing no titanium compound (C) in Comparative Example 1-1 and the EVOH resin composition containing the titanium compound (C) in an amount that exceeds a specific range in Comparative Example 1-2.

Furthermore, in a multilayer structure having a layer made of the EVOH resin composition of Example 1-1 or 1-2, thermal degradation is also suppressed, achieving excellent thermal stability.

<<Second Aspect>>

<Example 2-1>

Pellets of an EVOH resin with an ethylene structural unit content of 29 mol%, a saponification degree of 99.6 mol%, and a MFR of 4 g/10 min (at 210°C with a load of 2160 g) were used as the EVOH resin (A).

Additionally, polypropylene (EA9 available from Japan Polypropylene Corporation, density: 0.90 $g/cm^3$) was used as the polyolefin resin (B2) and titanium oxide (available from FUJIFILM Wako Pure Chemical Corporation) was used as the titanium compound (C).

A mixture was prepared by dry-blending 150 parts of the pellets of the EVOH resin (A), 2850 parts of the polyolefin resin (B2), and the titanium oxide in the amount of 0.01 ppm on a metal basis per mass of an EVOH resin composition. Then, the mixture was fed to a twin-screw extruder (20 mm in diameter) equipped with a two-hole die, and a strand extruded and ejected under the following extrusion conditions was cooled in a water tank and solidified. Next, the air was blown to the solidified strand to remove water droplets on the surface of the strand, and thereafter the strand was cut into pellets of the EVOH resin composition.

[Extrusion Conditions]

Extruder temperature setting (°C): C1/C2/C3/C4/C5/C6

=150/200/210/210/210/210

<Example 2-2>

Pellets of an EVOH resin composition were obtained in the same manner as in Example 2-1 except that the blending amount of the titanium oxide on a metal basis in Example 2-1 was changed to 0.083 ppm per mass of the EVOH resin composition.

<Comparative Example 2-1>

Pellets of an EVOH resin composition were obtained in the same manner as in Example 2-1 except that the titanium oxide in Example 2-1 was not used.

<Comparative Example 2-2>

Pellets of an EVOH resin composition were obtained in the same manner as in Example 2-1 except that the blending amount of the titanium oxide on a metal basis in Example 2-1 was changed to 0.83 ppm per mass of the EVOH resin composition.

The pellets of the EVOH resin composition obtained in Examples 2-1 and 2-2 and Comparative Examples 2-1 and 2-2 were evaluated for thermal stability as described below. The results are listed in Table 2-1 below.

[Thermal Stability Evaluation]

The weight loss rate was determined according to the following expression by measuring the weight using a thermogravimeter (Pyris 1 TGA available from Perkin Elmer Inc.) for 5 mg of the obtained pellets of the EVOH resin composition under a nitrogen atmosphere at a gas flow rate of 20 mL/min and a temperature of 230°C for 1 hour. The lower value means that the resin composition was less decomposed, that is, the resin composition exhibited better thermal stability.

Weight loss rate (%) = [(weight before heating - weight after heating)/weight before heating] $\times$ 100        <Expression>

Table 2-1

| | Amount of EVOH resin (A) (parts) | Amount of polyolefin resin (B2) (parts) | Amount of titanium compound (C) on metal basis per mass of resin composition (ppm) | Thermal stability evaluation |
| --- | --- | --- | --- | --- |
| | | | | Weight loss rate (%) |
| Example 2-1 | 150 | 2850 | 0.01 | 1.6 |
| Example 2-2 | 150 | 2850 | 0.083 | 1.5 |
| Comparative example 2-1 | 150 | 2850 | 0 | 1.9 |
| Comparative example 2-2 | 150 | 2850 | 0.83 | 1.9 |

As shown in Table 2-1, the EVOH resin compositions each containing the polyolefin resin (B2) and a particular minute amount of the titanium compound (C) in Examples 2-1 and 2-2 have the smaller weight change and better thermal stability as compared to the EVOH resin composition containing no titanium compound (C) in Comparative Example 2-1 and the EVOH resin composition containing the titanium compound (C) in an amount that exceeds a specific range in Comparative Example 2-2.

Furthermore, in a multilayer structure having a layer made of the EVOH resin composition of Example 2-1 or 2-2, thermal degradation is also suppressed, achieving excellent thermal stability.

<<Third Aspect>>

<Example 3-1>

Pellets of an EVOH resin with an ethylene structural unit content of 29 mol%, a saponification degree of 99.6 mol%, and a MFR of 4 g/10 min (at 210°C with a load of 2160 g) were used as the EVOH resin (A).

Additionally, an ethylene-butene random copolymer (available from Mitsui Chemicals, Inc., TAFMER A-4085S, density: 0.885 g/cm$^3$) (B3-1) and an acid-modified ethylene-butene copolymer (available from Mitsui Chemicals, Inc., MA8510, density: 0.885 g/cm$^3$) (B3-2) were used as the olefin polymer (B3), and titanium oxide (available from FUJIFILM Wako Pure Chemical Corporation) was used as the titanium compound (C).

A mixture was prepared by dry-blending 2400 parts of the pellets of the EVOH resin (A), 300 parts of (B3-1) and 300 parts of (B3-2) as the olefin polymer (B3), and the titanium oxide in the amount of 0.13 ppm on a metal basis per mass of an EVOH resin composition. Then, the mixture was fed to a twin-screw extruder (20 mm in diameter) equipped with a two-hole die, and a strand extruded and ejected under the following extrusion conditions was cooled in a water tank and solidified. Next, the air was blown to the solidified strand to remove water droplets on the surface of the strand, and thereafter the strand was cut into pellets of the EVOH resin composition.

[Extrusion Conditions]

Extruder temperature setting (°C): C1/C2/C3/C4/C5/C6

=150/200/210/210/210/210

<Example 3-2>

Pellets of an EVOH resin composition were obtained in the same manner as in Example 3-1 except that the blending amount of the titanium oxide on a metal basis in Example 3-1 was changed to 1.3 ppm per mass of the EVOH resin composition.

<Comparative Example 3-1>

Pellets of an EVOH resin composition were obtained in the same manner as in Example 3-1 except that the titanium oxide in Example 3-1 was not used.

<Comparative Example 3-2>

Pellets of an EVOH resin composition were obtained in the same manner as in Example 3-1 except that the blending amount of the titanium oxide on a metal basis in Example 3-1 was changed to 13 ppm per mass of the EVOH resin composition.

The pellets of the EVOH resin composition obtained in Examples 3-1 and 3-2 and Comparative Examples 3-1 and 3-2 were evaluated for thermal stability as described below. The results are listed in Table 3-1 below.

[Thermal Stability Evaluation]

The temperature at which the weight was reduced to 95% of the weight before measurement (5% weight loss temperature) was measured for 5 mg of the obtained pellets of the EVOH resin composition, using a thermogravimeter (Pyris 1 TGA available from Perkin Elmer Inc.) under a nitrogen atmosphere at a gas flow rate of 20 mL/min in a temperature range of 30 to 550°C. It means that the higher the temperature, the better the thermal stability.

Table 3-1

| | Amount of EVOH resin (A) (parts) | Amount of olefin polymer (B3) (parts) | | Amount of titanium compound (C) on metal basis per mass of resin composition (ppm) | Thermal stability evaluation |
| --- | --- | --- | --- | --- | --- |
| | | B3-1 | B3-2 | | 5% weight loss temperature (°C) |
| Example 3-1 | 2400 | 300 | 300 | 0.13 | 358 |
| Example 3-2 | 2400 | 300 | 300 | 1.3 | 357 |
| Comparative example 3-1 | 2400 | 300 | 300 | 0 | 354 |
| Comparative example 3-2 | 2400 | 300 | 300 | 13 | 351 |

As shown in Table 3-1, the EVOH resin compositions each containing the specific olefin polymer (B3) and a particular minute amount of the titanium compound (C) in Examples 3-1 and 3-2 have the higher 5% weight loss temperature and better thermal stability as compared to the EVOH resin composition containing no titanium compound (C) in Comparative Example 3-1 and the EVOH resin composition containing the titanium compound (C) in an amount that exceeds a specific range in Comparative Example 3-2.

Furthermore, in a multilayer structure having a layer made of the EVOH resin composition of Example 3-1 or 3-2, thermal degradation is also suppressed, achieving excellent thermal stability.

<<Fourth Aspect>>

<Example 4-1>

Pellets of an EVOH resin with an ethylene structural unit content of 29 mol%, a saponification degree of 99.6 mol%, and a MFR of 4 g/10 min (at 210°C with a load of 2160 g) were used as the EVOH resin (A).

Additionally, nylon 6 (Novamid 1028EN available from DSM Japan Engineering Plastics K.K.) was used as the polyamide resin (B4), and titanium oxide (available from FUJIFILM Wako Pure Chemical Corporation) was used as the titanium compound (C).

A mixture was prepared by dry-blending 90 parts of the EVOH resin (A), 10 parts of the polyamide resin (B4), and the titanium oxide in the amount of 0.1 ppm on a metal basis per mass of an EVOH resin composition. Then, the mixture was fed to a twin-screw extruder (20 mm in diameter) equipped with a two-hole die, and a strand extruded and ejected under the following extrusion conditions was cooled in a water tank and solidified. Next, the air was blown to the solidified strand to remove water droplets on the surface of the strand, and thereafter the strand was cut into pellets of the EVOH resin composition.

[Extrusion Conditions]

Extruder temperature setting (°C): C1/C2/C3/C4/C5/C6

=150/200/210/210/210/210

<Example 4-2>

Pellets of an EVOH resin composition were obtained in the same manner as in Example 4-1 except that the blending amount of the titanium oxide on a metal basis in Example 4-1 was changed to 1 ppm per mass of the EVOH resin composition.

<Comparative Example 4-1>

Pellets of an EVOH resin composition were obtained in the same manner as in Example 4-1 except that the titanium oxide in Example 4-1 was not used.

<Comparative Example 4-2>

Pellets of an EVOH resin composition were obtained in the same manner as in Example 4-1 except that the blending amount of the titanium oxide on a metal basis in Example 4-1 was changed to 10 ppm per mass of the EVOH resin composition.

The pellets of the EVOH resin composition obtained in Examples 4-1 and 4-2 and Comparative Examples 4-1 and 4-2 were evaluated for thermal stability as described below. The results are listed in Table 4-1 below.

[Thermal Stability Evaluation]

The temperature at which the weight was reduced to 95% of the weight before measurement (5% weight loss temperature) and the temperature at which the weight was reduced to 90% of the weight before measurement (10% weight loss temperature) were measured for 5 mg of the obtained pellets of the EVOH resin composition, using a thermogravimeter (Pyris 1 TGA available from Perkin Elmer Inc.) under a nitrogen atmosphere at a gas flow rate of 20 mL/min in a temperature range of 30 to 550°C. It means that the higher the temperature, the better the thermal stability.

Table 4-1

| | Amount of EVOH resin (A) (parts) | Amount of polyamide resin (B4) (parts) | Amount of titanium compound (C) on metal basis per mass of resin composition (ppm) | Thermal stability evaluation | |
|---|---|---|---|---|---|
| | | | | 5% weight loss temperature (°C) | 10% weight loss temperature (°C) |
| Example 4-1 | 90 | 10 | 0.1 | 343 | 362 |
| Example 4-2 | 90 | 10 | 1 | 341 | 361 |
| Comparative example 4-1 | 90 | 10 | 0 | 339 | 359 |
| Comparative example 4-2 | 90 | 10 | 10 | 339 | 359 |

As shown in Table 4-1, the EVOH resin compositions each containing the polyamide resin (B4) and a particular minute amount of the titanium compound (C) in Examples 4-1 and 4-2 have the higher 5% weight loss temperature and the higher 10% weight loss temperature, achieving excellent thermal stability as compared to the EVOH resin composition containing no titanium compound (C) in Comparative Example 4-1 and the EVOH resin composition containing the titanium compound (C) in an amount that exceeds a specific range in Comparative Example 4-2.

Furthermore, in a multilayer structure having a layer made of the EVOH resin composition of Example 4-1 or 4-2, thermal degradation is also suppressed, achieving excellent thermal stability.

<<Fifth Aspect>>

<Example 5-1>

Pellets of an EVOH resin with an ethylene structural unit content of 29 mol%, a saponification degree of 99.6 mol%, and a MFR of 4 g/10 min (at 210°C with a load of 2160 g) were used as the EVOH resin (A).

Additionally, 2,4-diphenyl-4-methyl-1-pentene (available from FUJIFILM Wako Pure Chemical Corporation) was used as the specific styrene derivative (B5), and titanium oxide (available from FUJIFILM Wako Pure Chemical Corporation) was used as the titanium compound (C).

A mixture was prepared by dry-blending 2000 ppm of the specific styrene derivative (B5) per mass of an EVOH resin composition and the titanium oxide in the amount of 0.1 ppm on a metal basis per mass of the EVOH resin composition with the pellets of the EVOH resin (A). Then, the mixture was preheated using a plastograph (available from Brabender GmbH & Co. KG) at 230°C for 5 minutes, followed by melt-kneading for 5 minutes, thereby obtaining the EVOH resin composition. The obtained EVOH resin composition was pulverized by a pulverizer (SKR16-240 available from Sometani Sangyo Company Limited.) at 650 rpm.

<Example 5-2>

A pulverized EVOH resin composition was obtained in the same manner as in Example 5-1 except that the blending amount of the titanium oxide on a metal basis in Example 5-1 was changed to 1 ppm per mass of the EVOH resin composition.

<Comparative Example 5-1>

A pulverized EVOH resin composition was obtained in the same manner as in Example 5-1 except that the titanium oxide in Example 5-1 was not used.

<Comparative Example 5-2>

A pulverized EVOH resin composition was obtained in the same manner as in Example 5-1 except that the blending amount of the titanium oxide on a metal basis in Example 5-1 was changed to 5 ppm per mass of the EVOH resin composition.

The pulverized EVOH resin compositions obtained in Examples 5-1 and 5-2 and Comparative Examples 5-1 and 5-2 were evaluated for thermal stability as described below. The results are listed in Table 5-1 below.

[Thermal Stability Evaluation]

The temperature at which the weight was reduced to 95% of the weight before measurement (5% weight loss temperature) and the temperature at which the weight was reduced to 90% of the weight before measurement (10% weight loss temperature) were measured for 5 mg of the pulverized EVOH resin composition thus obtained, using a thermogravimeter (Pyris 1 TGA available from Perkin Elmer Inc.) under a nitrogen atmosphere at a gas flow rate of 20 mL/min in a temperature range of 30 to 550°C. It means that the higher the temperature, the better the thermal stability.

Table 5-1

| | Amount of specific styrene derivative (B5) (ppm) | Amount of titanium compound (C) on metal basis (ppm) | Amount of specific styrene derivative (B5)/Amount of titanium compound (C) on metal basis | Thermal stability evaluation | |
| --- | --- | --- | --- | --- | --- |
| | | | | 5% weight loss temperature (°C) | 10% weight loss temperature (°C) |
| Example 5-1 | 2000 | 0.1 | 20000 | 334 | 355 |
| Example 5-2 | 2000 | 1 | 2000 | 330 | 352 |
| Comparative example 5-1 | 2000 | 0 | - | 329 | 350 |
| Comparative example 5-2 | 2000 | 5 | 400 | 325 | 347 |

As shown in Table 5-1, the EVOH resin compositions each containing the specific styrene derivative (B5) and a particular minute amount of the titanium compound (C) in Examples 5-1 and 5-2 have the higher 5% weight loss temperature and the higher 10% weight loss temperature, achieving excellent thermal stability as compared to the EVOH resin composition containing no titanium compound (C) in Comparative Example 5-1 and the EVOH resin composition containing the titanium compound (C) in an amount that exceeds a specific range in Comparative Example 5-2.

Furthermore, in a multilayer structure having a layer made of the EVOH resin composition of Example 5-1 or 5-2, thermal degradation is also suppressed, achieving excellent thermal stability.

Note that Comparative Examples in the above first to fifth aspects are comparative examples of the respective aspects, and not necessarily comparative examples of the present disclosure.

While specific forms of the embodiments of the present disclosure have been shown in the above examples, the examples are merely illustrative but not limitative. It is contemplated that various modifications apparent to those skilled in the art could be made within the scope of the present disclosure.

INDUSTRIAL APPLICABILITY

The present modified EVOH resin composition allows thermal degradation to be suppressed during melt molding and therefore is useful for various packaging materials for various foods, condiments such as mayonnaise and dressing, fermented foods such as miso, fat and oil foods such as salad oil, beverages, cosmetics, and pharmaceutical products.

**Claims**

1.    An ethylene-vinyl alcohol copolymer composition, comprising:

an ethylene-vinyl alcohol copolymer (A);
at least one compound (B) selected from a group consisting of a metal compound belonging to period 4 d-block of a long Periodic Table, other than a titanium compound (B1), a polyolefin resin (B2), an olefin polymer (B3), a polyamide resin (B4), and a styrene derivative having a substituent at an α-position (B5); and
a titanium compound (C),
wherein the olefin polymer (B3) is at least one selected from a group consisting of olefin thermoplastic elastomer, aliphatic rubber, and an ionomer, and
wherein the amount of the titanium compound (C) on a metal basis is 0.00005 ppm or more and less than 5 ppm per mass of the ethylene-vinyl alcohol copolymer composition.

2. The ethylene-vinyl alcohol copolymer composition according to claim 1, wherein a mass content ratio (A)/(B) of the ethylene-vinyl alcohol copolymer (A) to the component (B) is 1/99 to 99/1.

3. The ethylene-vinyl alcohol copolymer composition according to claim 1 or 2, wherein the amount of the titanium compound (C) on a metal basis is 0.001 to 3 ppm relative to total mass of the ethylene-vinyl alcohol copolymer (A) and the titanium compound (C).

4. The ethylene-vinyl alcohol copolymer composition according to any one of claims 1 to 3, wherein the amount of the metal compound belonging to period 4 d-block of a long Periodic Table (B1) on a metal basis is 0.1 to 500 ppm per mass of the ethylene-vinyl alcohol copolymer composition.

5. The ethylene-vinyl alcohol copolymer composition according to any one of claims 1 to 4, wherein the metal compound belonging to period 4 d-block of a long Periodic Table (B1) is a zinc compound.

6. The ethylene-vinyl alcohol copolymer composition according to any one of claims 1 to 5, wherein the metal compound belonging to period 4 d-block of a long Periodic Table (B1) is carboxylate.

7. The ethylene-vinyl alcohol copolymer composition according to any one of claims 1 to 3, wherein the polyolefin resin (B2) is a polyolefin resin having a density of 0.89 g/cm$^3$ or greater.

8. The ethylene-vinyl alcohol copolymer composition according to any one of claims 1 to 3 and 7, wherein the polyolefin resin (B2) is polypropylene.

9. The ethylene-vinyl alcohol copolymer composition according to any one of claims 1 to 3, wherein the amount of the styrene derivative having a substituent at an $\alpha$-position (B5) is 1 to 10000 ppm per mass of the ethylene-vinyl alcohol copolymer composition.

10. The ethylene-vinyl alcohol copolymer composition according to any one of claims 1 to 3 and 9, wherein the styrene derivative having a substituent at an $\alpha$-position (B5) is an $\alpha$-methylstyrene derivative.

11. A method for producing the ethylene-vinyl alcohol copolymer composition according to any one of claims 1 to 10, comprising melt-mixing a composition raw material comprising the (A), (B), and (C).

12. A melt-forming material comprising the ethylene-vinyl alcohol copolymer composition according to any one of claims 1 to 10.

13. Pellets comprising the ethylene-vinyl alcohol copolymer composition according to any one of claims 1 to 10.

14. A multilayer structure comprising at least one layer comprising the ethylene-vinyl alcohol copolymer composition according to any one of claims 1 to 10.

15. A method for producing the multilayer structure according to claim 14, comprising melt-molding a layer comprising the ethylene-vinyl alcohol copolymer composition.


**Patentansprüche**

1. Ethylen-Vinylalkohol-Copolymerzusammensetzung, umfassend:

ein Ethylen-Vinylalkohol-Copolymer (A),
mindestens eine Verbindung (B), ausgewählt aus einer Gruppe, bestehend aus einer zu der 4. Periode des d-Blocks eines Langperiodensystems zugehörigen Metallverbindung mit Ausnahme einer Titanverbindung (B1), einem Polyolefinharz (B2), einem Olefinpolymer (B3), einem Polyamidharz (B4) und einem Styrolderivat mit einem Substituenten an der $\alpha$-Position (B5), ausgewählt ist, und
eine Titanverbindung (C),
wobei das Olefinpolymer (B3) mindestens eines, ausgewählt aus einer Gruppe, bestehend aus thermoplastischem Olefin-Elastomer, aliphatischem Kautschuk und einem Ionomer, ist und

wobei die Menge der Titanverbindung (C) auf Metallbasis 0,00005 ppm oder mehr und weniger als 5 ppm pro Masse der Ethylen-Vinylalkohol-Copolymerzusammensetzung beträgt.

2. Ethylen-Vinylalkohol-Copolymerzusammensetzung gemäß Anspruch 1, wobei ein Massengehaltsverhältnis (A)/(B) des Ethylen-Vinylalkohol-Copolymers (A) zu der Komponente (B) 1/99 bis 99/1 beträgt.

3. Ethylen-Vinylalkohol-Copolymerzusammensetzung gemäß Anspruch 1 oder 2, wobei die Menge der Titanverbindung (C) auf Metallbasis 0,001 bis 3 ppm bezogen auf eine Gesamtmasse des Ethylen-Vinylalkohol-Copolymers (A) und der Titanverbindung (C) beträgt.

4. Ethylen-Vinylalkohol-Copolymerzusammensetzung gemäß einem der Ansprüche 1 bis 3, wobei die Menge der zur 4. Periode des d-Blocks eines Langperiodensystems zugehörigen Metallverbindung (B1) auf Metallbasis 0,1 bis 500 ppm pro Masse der Ethylen-Vinylalkohol-Copolymerzusammensetzung beträgt.

5. Ethylen-Vinylalkohol-Copolymerzusammensetzung gemäß einem der Ansprüche 1 bis 4, wobei die zur 4. Periode des d-Blocks eines Langperiodensystems zugehörigen Metallverbindung (B1) eine Zinkverbindung ist.

6. Ethylen-Vinylalkohol-Copolymerzusammensetzung gemäß einem der Ansprüche 1 bis 5, wobei die zur 4. Periode des d-Blocks eines Langperiodensystems zugehörigen Metallverbindung (B1) ein Carboxylat ist.

7. Ethylen-Vinylalkohol-Copolymerzusammensetzung gemäß einem der Ansprüche 1 bis 3, wobei das Polyolefinharz (B2) ein Polyolefinharz mit einer Dichte von 0,89 g/cm$^3$ oder größer ist.

8. Ethylen-Vinylalkohol-Copolymerzusammensetzung gemäß einem der Ansprüche 1 bis 3 und 7, wobei das Polyolefinharz (B2) Polypropylen ist.

9. Ethylen-Vinylalkohol-Copolymerzusammensetzung gemäß einem der Ansprüche 1 bis 3, wobei die Menge des Styrolderivats mit einem Substituenten an der $\alpha$-Position (B5) 1 bis 10.000 ppm pro Masse der Ethylen-Vinylalkohol-Copolymerzusammensetzung beträgt.

10. Ethylen-Vinylalkohol-Copolymerzusammensetzung gemäß einem der Ansprüche 1 bis 3 und 9, wobei das Styrolderivat mit einem Substituenten an der $\alpha$-Position (B5) ein $\alpha$-Methylstyrolderivat ist.

11. Verfahren zur Herstellung der Ethylen-Vinylalkohol-Copolymerzusammensetzung gemäß einem der Ansprüche 1 bis 10, umfassend das Schmelzmischen einer Ausgangsmaterialzusammensetzung, die (A), (B) und (C) umfasst.

12. Schmelzbildendes Material, umfassend die Ethylen-Vinylalkohol-Copolymerzusammensetzung gemäß einem der Ansprüche 1 bis 10.

13. Pellets, umfassend die Ethylen-Vinylalkohol-Copolymerzusammensetzung gemäß einem der Ansprüche 1 bis 10.

14. Mehrschichtstruktur, umfassend mindestens eine Schicht, umfassend die Ethylen-Vinylalkohol-Copolymerzusammensetzung gemäß einem der Ansprüche 1 bis 10.

15. Verfahren zur Herstellung der Mehrschichtstruktur gemäß Anspruch 14, umfassend das Schmelzformen einer Schicht, die die Ethylen-Vinylalkohol-Copolymerzusammensetzung umfasst.


**Revendications**

1. Composition de copolymère d'éthylène-alcool vinylique, comprenant :

   un copolymère d'éthylène-alcool vinylique (A) ;
   au moins un composé (B) choisi dans le groupe constitué par un composé métallique appartenant au bloc d de la quatrième période d'un tableau périodique long, autre qu'un composé de titane (B1), une résine polyoléfinique (B2), un polymère oléfinique (B3), une résine polyamide (B4) et un dérivé de styrène présentant un substituant en position $\alpha$ (B5) ; et

un composé de titane (C),

dans lequel le polymère oléfinique (B3) est au moins un composé choisi dans un groupe comprenant un élastomère thermoplastique oléfinique, un caoutchouc aliphatique et un ionomère, et

dans lequel la quantité du composé de titane (C) sur une base métallique est de 0,00005 ppm ou plus et inférieure à 5 ppm par masse de la composition de copolymère d'éthylène-alcool vinylique.

2. Composition de copolymère d'éthylène-alcool vinylique selon la revendication 1, dans laquelle le rapport massique (A)/(B) du copolymère d'éthylène-alcool vinylique (A) au composant (B) est compris entre 1/99 et 99/1.

3. Composition de copolymère d'éthylène-alcool vinylique selon la revendication 1 ou la revendication 2, dans laquelle la quantité du composé de titane (C) sur une base métallique est comprise entre 0,001 et 3 ppm par rapport à la masse totale du copolymère d'éthylène-alcool vinylique (A) et du composé de titane (C).

4. Composition de copolymère d'éthylène-alcool vinylique selon l'une quelconque des revendications 1 à 3, dans laquelle la quantité du composé métallique appartenant au bloc d de la période 4 d'un tableau périodique long (B1) sur une base métallique est comprise entre 0,1 et 500 ppm par masse de la composition de copolymère d'éthylène-alcool vinylique.

5. Composition de copolymère d'éthylène-alcool vinylique selon l'une quelconque des revendications 1 à 4, dans laquelle le composé métallique appartenant au bloc d de la période 4 d'un tableau périodique long (B1) est un composé de zinc.

6. Composition de copolymère d'éthylène-alcool vinylique selon l'une quelconque des revendications 1 à 5, dans laquelle le composé métallique appartenant au bloc d de la période 4 d'un tableau périodique long (B1) est un carboxylate.

7. Composition de copolymère d'éthylène-alcool vinylique selon l'une quelconque des revendications 1 à 3, dans laquelle la résine polyoléfinique (B2) est une résine polyoléfinique présentant une densité de 0,89 g/cm$^3$ ou plus.

8. Composition de copolymère d'éthylène-alcool vinylique selon l'une quelconque des revendications 1 à 3 et 7, dans laquelle la résine polyoléfinique (B2) est du polypropylène.

9. Composition de copolymère d'éthylène-alcool vinylique selon l'une quelconque des revendications 1 à 3, dans laquelle la quantité du dérivé de styrène présentant un substituant en position $\alpha$ (B5) est de 1 à 10000 ppm par masse de la composition de copolymère d'éthylène-alcool vinylique.

10. Composition de copolymère d'éthylène-alcool vinylique selon l'une quelconque des revendications 1 à 3 et 9, dans laquelle le dérivé de styrène présentant un substituant en position $\alpha$ (B5) est un dérivé d'$\alpha$-méthylstyrène.

11. Procédé de production de la composition de copolymère d'éthylène-alcool vinylique selon l'une quelconque des revendications 1 à 10, comprenant le fait de mélanger à l'état fondu une matière première de composition comprenant les composants (A), (B) et (C).

12. Matériau thermofusible comprenant la composition de copolymère d'éthylène-alcool vinylique selon l'une quelconque des revendications 1 à 10.

13. Granulés comprenant la composition de copolymère d'éthylène-alcool vinylique selon l'une quelconque des revendications 1 à 10.

14. Structure multicouche comprenant au moins une couche comprenant la composition de copolymère d'éthylène-alcool vinylique selon l'une quelconque des revendications 1 à 10.

15. Procédé de production de la structure multicouche selon la revendication 14, comprenant le fait de mouler à l'état fondu une couche comprenant la composition de copolymère d'éthylène-alcool vinylique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11106592 A
- US 2020087496 A1
- JP H08311254 A
- JP 2011202147 A
- WO 2015141610 A
- JP 2005178324 A
- JP 2009242591 A
- WO 2013146961 A